# EUROPEAN PATENT APPLICATION

(11) **EP 3 934 182 A1**
(43) Date of publication of application: **05.01.2022**
(21) Application number: 20765697.6
(22) Date of filing: 14.02.2020
(51) Int. Cl.: H04L 12/70, H04W 4/38

(54) **INFORMATION PROCESSING DEVICE, INFORMATION PROCESSING METHOD, AND PROGRAM**

(30) Priority: 01.03.2019 JP 2019037260
(71) Applicant: Sony Group Corporation, Tokyo 108-0075 (JP)
(72) Inventor: TAKANO, Hiroaki, Tokyo 108-0075 (JP)
(74) Representative: MFG Patentanwälte Meyer-Wildhagen Meggle-Freund Gerhard PartG mbB
(86) International application number: PCT/JP2020/005727
(87) International publication number: WO 2020/179406

(57) **Abstract**

The present disclosure relates to an information processing apparatus, an information processing method, and a program that enable easy acquisition of desired data.

A presentation unit presents device information regarding a plurality of real IoT devices to a user, and a request unit requests linkage between a virtual IoT device and the real IoT device corresponding to the device information selected by the user. The technology according to the present disclosure can be applied to, for example, user equipment used by an IoT service provider.

## Description

### TECHNICAL FIELD

The present disclosure relates to an information processing apparatus, an information processing method, and a program, and particularly relates to an information processing apparatus, an information processing method, and a program that enable easy acquisition of desired data.

### BACKGROUND ART

By connecting various devices with the Internet with Internet of Things (IoT) technology, it has become possible to acquire a large amount of data on a daily basis.

In recent years, in an IoT system, suppression of a load on a server and a communication load due to an increase in data amount is required. For example, Patent Literature 1 discloses a technique for suppressing a load related to communication between a server and a device as compared with a case where the server is placed closer to the Internet than a gateway, by placing the server closer to a local network than the gateway.

### CITATION LIST

### PATENT DOCUMENT

Patent Document 1: Japanese Patent Application Laid-Open No. 2018-137575

### SUMMARY OF THE INVENTION

### PROBLEMS TO BE SOLVED BY THE INVENTION

Furthermore, it is desirable that a user can easily acquire desired data from devices installed in various places.

The present disclosure has been made in view of such a situation, and is intended to enable desired data to be easily acquired.

### SOLUTIONS TO PROBLEMS

An information processing apparatus according to the present disclosure is an information processing apparatus including: a presentation unit configured to present device information regarding a plurality of real IoT devices to a user; and a request unit configured to request linkage between a virtual IoT device and the real IoT device corresponding to the device information selected by the user.

An information processing method of the present disclosure is an information processing method for an information processing apparatus to execute: presenting device information regarding a plurality of real IoT devices; and requesting linkage between a virtual IoT device and the real IoT device corresponding to the device information selected by the user.

A program of the present disclosure is a program for causing a computer to execute processing of: presenting device information regarding a plurality of real IoT devices; and requesting linkage between a virtual IoT device and the real IoT device corresponding to the device information selected by the user.

In the present disclosure, device information regarding a plurality of real IoT devices is presented, and linkage between the real IoT device corresponding to the device information selected by a user and a virtual IoT device is requested.

### BRIEF DESCRIPTION OF DRAWINGS

Fig. 1 is a view for explaining preconditions of the technology according to the present disclosure.
Fig. 2 is a view showing a configuration example of an IoT system according to the present embodiment.
Fig. 3 is a view showing an example of 1:1 linkage of a virtual IoT device.
Fig. 4 is a block diagram showing a functional configuration example of a server.
Fig. 5 is a block diagram showing a functional configuration example of user equipment.
Fig. 6 is a flowchart for explaining a flow of linkage.
Fig. 7 is a view showing a presentation example of a capability of a real IoT device.
Fig. 8 is a view showing an example of N:1 linkage of a virtual IoT device.
Fig. 9 is a view showing an example of device information.
Fig. 10 is a view showing an example of information of a selected real IoT device.
Fig. 11 is a view showing a description example of a linkage request.
Fig. 12 is a view showing an example of a GUI used for a linkage request.
Fig. 13 is a view showing an example of a GUI used for a linkage request.
Fig. 14 is a view showing an example of 1:N linkage of a virtual IoT device.
Fig. 15 is a flowchart for explaining a flow of linkage.
Fig. 16 is a view showing an example of device information.
Fig. 17 is a view showing a presentation example of a load of a real IoT device.
Fig. 18 is a view showing a presentation example of a load of a real IoT device.
Fig. 19 is a view showing a configuration of a packet in VXLAN.
Fig. 20 is a view showing an example of linkage of a virtual IoT device by L2 connection.
Fig. 21 is a flowchart for explaining a flow of linkage.
Fig. 22 is a view showing an example of new installation information of a real IoT device.
Fig. 23 is a view showing an example of linkage of a virtual IoT device in a hierarchical structure.
Fig. 24 is a flowchart for explaining a flow of linkage.
Fig. 25 is a view showing an example of device information.
Fig. 26 is a view showing an example of a GUI used for a linkage request.
Fig. 27 is a view showing an example of a GUI used for a linkage request.
Fig. 28 is a view showing an example of linkage of a virtual IoT device with a plurality of ports.
Fig. 29 is a view showing an example of port information of an input port and an output port.
Fig. 30 is a flowchart for explaining a flow of linkage.
Fig. 31 is a view showing an example of burden information of a virtual IoT device.
Fig. 32 is a block diagram showing a hardware configuration example of an information processing apparatus.

### MODE FOR CARRYING OUT THE INVENTION

Hereinafter, embodiments for implementing the present disclosure (hereinafter, referred to as embodiments) will be described. Note that the description will be given in the following order.

1. Outline of IoT System
1-1. About IoT
1-2. Sharing of real IoT device and virtual IoT device
1-3. Preconditions of technology according to present disclosure
1-4. Configuration example of IoT system
2. First embodiment
2-1. 1:1 linkage of virtual IoT device
2-2. N:1 linkage of virtual IoT device
2-3. GUI used for linkage request
2-4. 1:N linkage of virtual IoT device
2-5. Linkage of virtual IoT device by L2 connection
2-6. New installation of real IoT device
3. Second embodiment
3-1. Linkage of virtual IoT device in hierarchical structure
3-2. GUI used for linkage request
3-3. Linkage of virtual IoT device with plurality of ports
3-4. About burden on virtual IoT device of lower hierarchy
4. Hardware configuration example

### <1. Outline of IoT system>

### (1-1. About IoT)

The Internet of Things (IoT) is a mechanism in which various objects directly communicate with each other, unlike communication between persons, which is performed using equipment such as a smartphone. Machine type communication (MTC) and machine-to-machine (M2M) are terms representing a network topology for realizing the IoT, and represent a connection form in which machines communicate with each other.

One of features of the IoT is that there are many devices that perform communication. Assuming that there are 10 pieces of equipment related to one person, 10 to 100 times the number of devices are installed everywhere. While communication includes wired communication and wireless communication, wireless communication with less restriction on a place where a device is installed is used in the IoT.

In general, a sensor, a communication means, an application, a storage, and a user interface are required for constructing an IoT system. As a basic flow, the sensor collects data and notifies the application on a network side of the data via the communication means such as wireless communication. The application performs analysis or the like based on the notified data, and presents a result to a user via the user interface. There are a wide variety of use cases of IoT systems, such as factory management, power management, agriculture, and healthcare. Currently, IoT systems corresponding to individual use cases are often individually constructed and operated.

### (1-2. Sharing of real IoT device and virtual IoT device)

While sensors need to be installed in various places in the IoT system, installation locations of the sensors include a public place, a private home, and the like where many sensors cannot be installed. Although it is technically possible for a large number of IoT service providers to individually install the sensors in these places, it is difficult from the viewpoint of economic and place restrictions.

Therefore, it is necessary for a plurality of IoT service providers to share already installed sensors, and a technology for realizing sharing of the sensors is required. Furthermore, normally, for example, in a case where a temperature sensor is installed, a capability to measure a temperature cannot be changed to a capability to measure wind power. In order to solve these problems, by setting a virtual IoT sensor, one real IoT sensor can be shared by a plurality of IoT service providers, or a capability of a virtual IoT sensor can be changed to a capability of a temperature sensor or a capability of a wind power sensor.

The technology according to the present disclosure proposes a method of associating a real IoT device and a virtual IoT device in order to handle the virtual IoT sensor like the real IoT sensor. Here, the real IoT device refers to a device such as a sensor that actually exists physically. Whereas, the virtual IoT device refers to a virtual device realized by software on a network, and can aggregate various types of data acquired by various types of real IoT devices. Hereinafter, the real IoT device is assumed to be a sensor, but is considered to include a device other than the sensor.

### (1-3. Preconditions of technology according to present disclosure)

As a precondition of the technology according to the present disclosure, it is assumed that device information such as an installation location and a capability of the real IoT device is centrally managed by a server on a network. This configuration makes it possible to reduce temporal labor such as searching for the real IoT device each time when using the real IoT device.

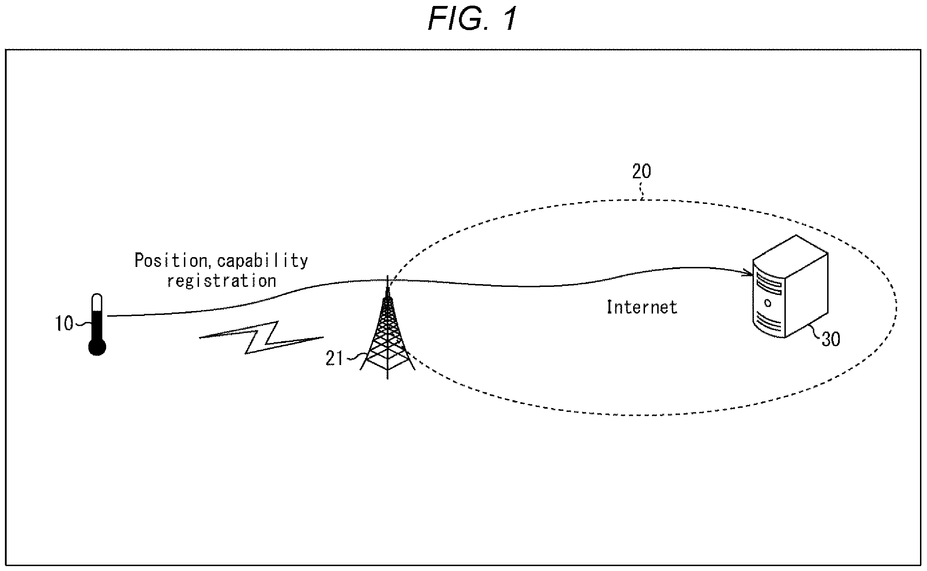

Specifically, as shown in Fig. 1, for example, a real IoT device 10 configured as a temperature sensor notifies a server 30 of an installation location and a capability of the real IoT device 10 when connected to an Internet 20 via an access point 21. The server 30 organizes and holds installation locations and capabilities of a plurality of real IoT devices as device information. More specifically, the device information is classified by the installation location of the real IoT device, classified by the capability for each installation location, and stored in a database. An IP address and a MAC address of the real IoT device are also held as the device information. This configuration makes it easier to search for real IoT devices.

### (1-4. Configuration example of IoT system)

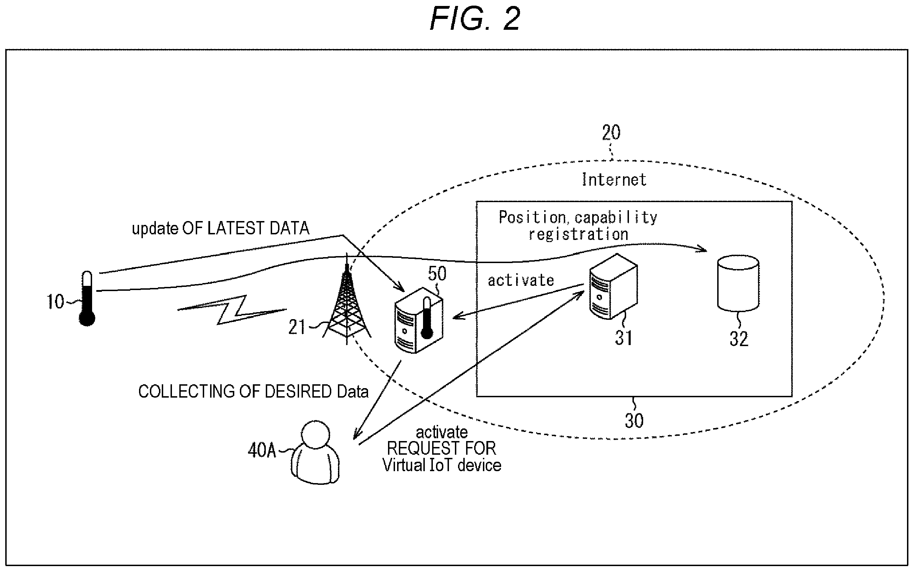

Fig. 2 is a view showing a configuration example of an IoT system to which the technology according to the present disclosure is applied.

In Fig. 2, the real IoT device 10 is configured as a sensor such as a temperature sensor, for example, and is installed outdoors or in a private home.

The server 30 is managed by a business operator who performs business to obtain permission to use the real IoT device 10. The server 30 includes a virtual IoT device management unit 31 and a repository function unit 32. The virtual IoT device management unit 31 manages a virtual IoT device 50, and the repository function unit 32 holds the device information of the real IoT device 10.

A user 40A is an IoT service provider or an individual who performs business such as an IoT service by using data from the virtual IoT device 50. The data of the real IoT device 10 is requested by the virtual IoT device 50 through user equipment 40 (to be described later) including a smartphone, a personal computer (PC), or the like used by the user 40A.

The virtual IoT device 50 is a virtual device realized by software in a predetermined computer on the Internet 20. To the virtual IoT device 50, latest data is uploaded from the real IoT device 10.

In the example of Fig. 2, when collecting data of detailed temperature distribution in a certain region and publishing the data on the Web, the user 40A, which is the IoT service provider, requests a business operator managing the server 30 to provide data of the real IoT device 10.

Specifically, the user equipment 40 of the user 40A requests the virtual IoT device management unit 31 of the server 30 to activate (enable) the virtual IoT device 50. The virtual IoT device management unit 31 activates the virtual IoT device 50 in response to the request from the user equipment 40, associates with the real IoT device 10, and notifies the user equipment 40 of position information (for example, a URL) of the virtual IoT device 50. This configuration enables the user 40A to collect data of the real IoT device 10 via the virtual IoT device 50.

With such a configuration, data of a desired real IoT device is to be provided to various IoT service providers.

The IoT system of Fig. 2 may be configured as a system including an edge server. In this case, by realizing the virtual IoT device 50 with the edge server, and distributing the edge server closer to the real IoT device 10 than the server 30, it is possible to shorten a communication delay, increase in speed of processing, and improve real-time performance.

Furthermore, the IoT system in Fig. 2 may be configured as a system including fog computing. In this case, the virtual IoT device 50 is realized by fog computing. This configuration makes it possible to distribute computing resources at a position close to the real IoT device 10, and perform various processes such as data management, accumulation, and conversion, which thus can shorten a communication delay, increase in speed of processing, and improve real-time performance.

Meanwhile, in associating the real IoT device and the virtual IoT device, there has not been proposed a specific method indicating what kind of information the association is based on. Hereinafter, the association between the real IoT device and the virtual IoT device and the association between the virtual IoT devices to be described later are referred to as linkage. First, an embodiment for implementing linkage between the real IoT device and the virtual IoT device will be described below.

### <2. First embodiment>

### (2-1. 1:1 linkage of virtual IoT device)

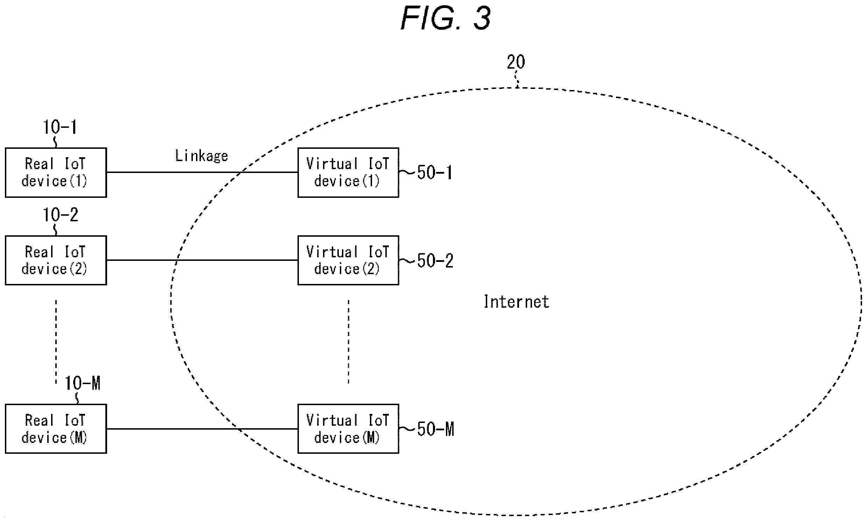

Fig. 3 is a view showing an example of linkage between the real IoT device 10 and the virtual IoT device 50.

In the example of Fig. 3, 1:1 linkage is respectively made between M pieces of real IoT device 10-1, 10-2, ···, and 10-M and M pieces of virtual IoT device 50-1, 50-2, ···, and 50-M on the Internet.

As described with reference to Fig. 2, the server 30 performs linkage of the real IoT device 10 and the virtual IoT device 50 by activating the virtual IoT device 50 in response to a request from the user equipment 40.

### (Configuration of server)

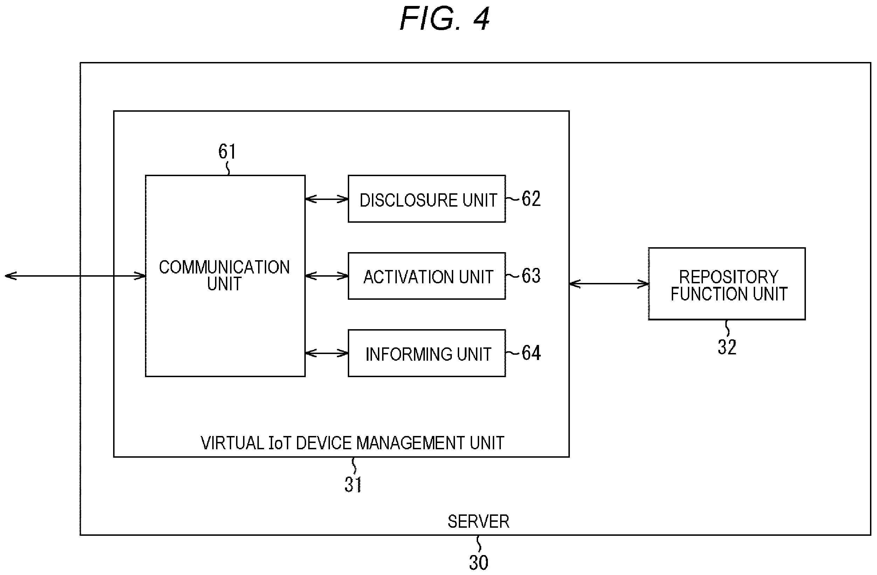

Fig. 4 is a view showing a functional configuration example of the server 30.

As described above, the server 30 includes the virtual IoT device management unit 31 configured to manage the virtual IoT device 50, and the repository function unit 32 configured to hold device information of the real IoT device 10.

The virtual IoT device management unit 31 includes a communication unit 61, a disclosure unit 62, an activation unit 63, and an informing unit 64.

The communication unit 61 communicates with the real IoT device 10, the virtual IoT device 50, and the user equipment 40 via the Internet 20.

The disclosure unit 62 discloses the device information of the real IoT device 10 held by the repository function unit 32 to the user equipment 40, in response to a request from the user equipment 40. The device information is disclosed via the communication unit 61.

The activation unit 63 activates the virtual IoT device 50 in a predetermined computer on the Internet 20, in response to a request from the user equipment 40. The activation of the virtual IoT device 50 is performed via the communication unit 61.

For example, the informing unit 64 informs the real IoT device 10 and the user equipment 40 of position information of the virtual IoT device 50 activated by the activation unit 63. The informing of the position information is performed via the communication unit 61.

### (Configuration of user equipment)

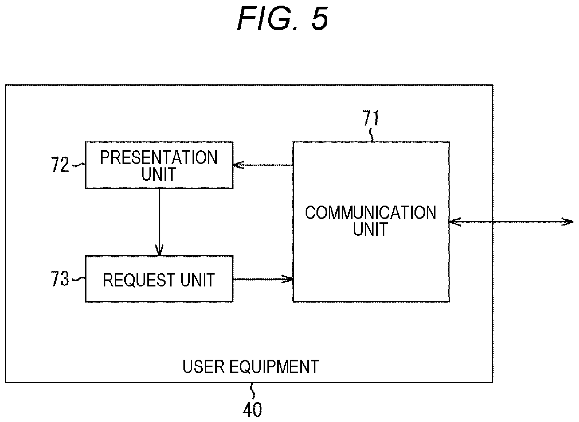

Fig. 5 is a view showing a functional configuration example of the user equipment 40.

The user equipment 40 includes a communication unit 71, a presentation unit 72, and a request unit 73.

The communication unit 71 communicates with the server 30 and the virtual IoT device 50 via the Internet 20.

The presentation unit 72 presents device information of the real IoT device 10 disclosed by the server 30, to the user 40A. The presentation unit 72 may be configured as, for example, a monitor to present information by display on a screen, or may be configured as a speaker to present information by voice. Furthermore, the presentation unit 72 may be configured as a printer to present information by printing on a print medium such as paper.

The request unit 73 requests the server 30 and the virtual IoT device 50 for various requests. For example, the request unit 73 requests linkage between the virtual IoT device 50 and the real IoT device 10 corresponding to device information selected by the user 40A from the presented device information. Furthermore, the request unit 73 requests data acquired by the real IoT device 10, from the virtual IoT device 50 linked with the real IoT device 10.

### (Flow of linkage)

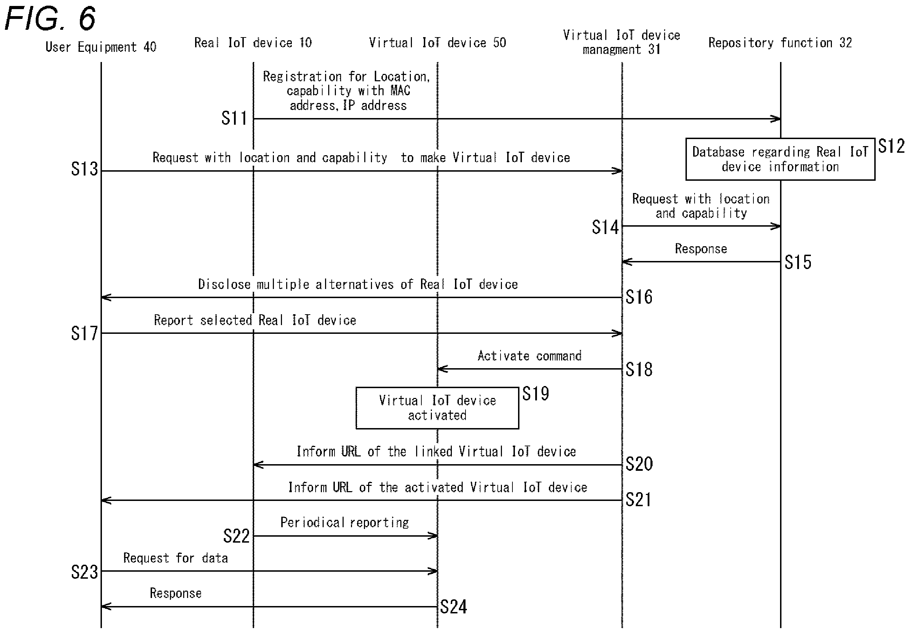

Next, a flow of linkage between the real IoT device 10 and the virtual IoT device 50 will be described with reference to Fig. 6. Fig. 6 shows individual operations of the user equipment 40, the real IoT device 10, the virtual IoT device 50, and the virtual IoT device management unit 31 and the repository function unit 32 of the server 30.

After the real IoT device 10 is installed and connected to the Internet 20, first, in step S11, the real IoT device 10 notifies the server 30 designated by a predetermined URL of its own installation location, a capability, a MAC address, and an IP address. The capability of the real IoT device 10 is represented by, for example, a type of data that can be collected (for example, numerical values such as a temperature, a humidity, and wind power, and contents such as sound and video).

In step S12, the repository function unit 32 of the server 30 stores information such as the installation location and the capability notified from the real IoT device 10, into a database as device information.

This configuration enables the installation location and the capability of the real IoT device 10 to be registered by the server 30 and centrally managed.

Note that, even in a case of a real IoT device not having such a registration function, the installation location and the capability of the real IoT device can be registered by a provider thereof accessing the server 30 via the Internet 20.

Meanwhile, although there is a plurality of IoT service providers that desire to collect data of a real IoT device, where the virtual IoT device is to be generated differs depending on a region and a type of the data.

Therefore, in step S13, the request unit 73 of the user equipment 40 requests an installation location and a capability for generating the virtual IoT device from the virtual IoT device management unit 31, in response to an operation of the user 40A who is an IoT service provider that desires to collect data of a certain region and type.

In step S14, the disclosure unit 62 of the virtual IoT device management unit 31 requests the installation location and the capability from the repository function unit 32, in response to a request from the user equipment 40.

In step S15, the repository function unit 32 responds to the request from the disclosure unit 62. Specifically, as a response to the virtual IoT device management unit 31, the repository function unit 32 reads device information including the requested installation location and capability from the database, and supplies to the virtual IoT device management unit 31.

In step S16, as a response to the request from the user equipment 40, the disclosure unit 62 of the virtual IoT device management unit 31 discloses the device information (the installation location and the capability) from the repository function unit 32, to the user equipment 40. Then, the presentation unit 72 of the user equipment 40 presents the device information disclosed by the disclosure unit 62, to the user 40A. In other words, the presentation unit 72 presents a plurality of options of real IoT device from which the user 40A desires to collect data.

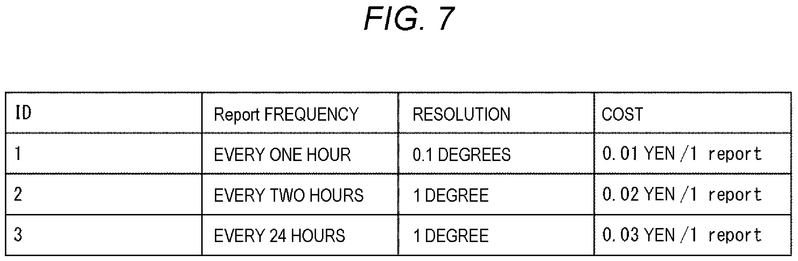

Fig. 7 is a view showing a presentation example of a capability of the real IoT device.

The example of Fig. 7 shows, as options, three real IoT devices individually having IDs of 1, 2, and 3, and presents a report frequency, resolution, and a cost as the capability of each real IoT device.

The report frequency represents a frequency at which the real IoT device transmits acquired data to the linked virtual IoT device. In the example of Fig. 7, the report frequency of the real IoT device having the ID of 1 (hereinafter, referred to as real IoT device (1) or the like) is every hour, the report frequency of real IoT device (2) is every two hours, and the report frequency of real IoT device (3) is every 24 hours.

The resolution represents resolution of data acquired by the real IoT device. In the example of Fig. 7, the acquired data is a temperature, the resolution of real IoT device (1) is 0.1 degrees, the resolution of real IoT device (2) is 1 degree, and the resolution of real IoT device (3) is 1 degree.

The cost represents an amount of money to be required for that real IoT device to transmit once the acquired data to the linked virtual IoT device. In the example of Fig. 7, the cost of real IoT device (1) is 0.01 yen, the cost of real IoT device (2) is 0.02 yen, and the cost of real IoT device (3) is 0.03 yen.

The user 40A can select a desired real IoT device from the options (device information) of the real IoT device presented by the user equipment 40.

Now, returning to the description of Fig. 6, in step S17, the user equipment 40 requests the virtual IoT device management unit 31 for linkage between the virtual IoT device 50 and the real IoT device 10 selected by the user 40A.

In step S18, the activation unit 63 of the virtual IoT device management unit 31 activates the virtual IoT device 50 in response to a request from the user equipment 40. Specifically, the activation unit 63 transmits a command for activating a virtual machine on the Internet 20. The virtual machine is desirably activated at a position close to the real IoT device 10 on the Internet 20.

With this configuration, in step S19, the virtual IoT device 50 is activated. As a result, the real IoT device 10 selected by the user 40A is linked with the virtual IoT device 50.

Thereafter, in step S20, the informing unit 64 of the virtual IoT device management unit 31 informs the real IoT device 10 of a URL of the virtual IoT device 50 as position information (communication destination) of the linked virtual IoT device 50.

Similarly, in step S21, the informing unit 64 of the virtual IoT device management unit 31 also informs the user equipment 40 of the URL of the linked virtual IoT device 50.

In the real IoT device 10, the URL of the virtual IoT device 50 is stored as a transmission destination of collected data. In other words, in step S22, the real IoT device 10 periodically (at the report frequency described above) transmits the collected data to the virtual IoT device 50.

In the user equipment 40, the URL of the virtual IoT device 50 is stored as a request destination of data collected in the real IoT device 10. In other words, in step S23, the request unit 73 of the user equipment 40 requests the data collected in the real IoT device 10, from the virtual IoT device 50. In step S24, the virtual IoT device 50 transmits the requested data to the user equipment 40.

Note that, instead of the URL of the virtual IoT device 50, a MAC address or an IP address of the virtual IoT device 50 may be notified to the real IoT device 10 and the user equipment 40.

According to the above processing, the user 40A can arrange, on the Internet 20, the virtual IoT device 50 corresponding to the real IoT device 10 that collects data of a desired region and type. This configuration allows the user 40A to easily acquire desired data.

### (2-2. N:1 linkage of virtual IoT device)

As described with reference to Fig. 3, in a case where 1:1 linkage of the virtual IoT device 50 is made with a plurality of real IoT devices 10, management of the virtual IoT device 50 may be complicated.

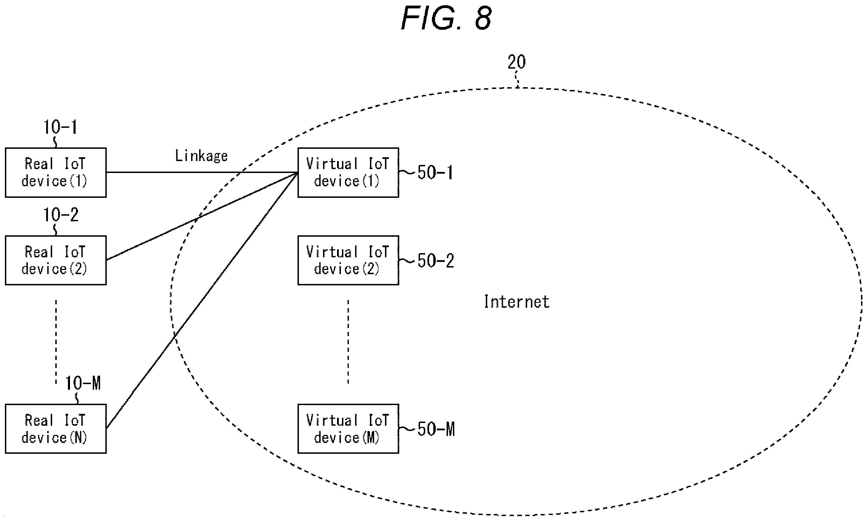

Therefore, as shown in Fig. 8, by linking one virtual IoT device 50 with a plurality of real IoT devices 10, it is possible to facilitate management of the virtual IoT device 50.

In the example of Fig. 8, N:1 linkage is made between N pieces of real IoT device 10-1, 10-2, ···, and 10-N and one virtual IoT device 50-1 on the Internet 20.

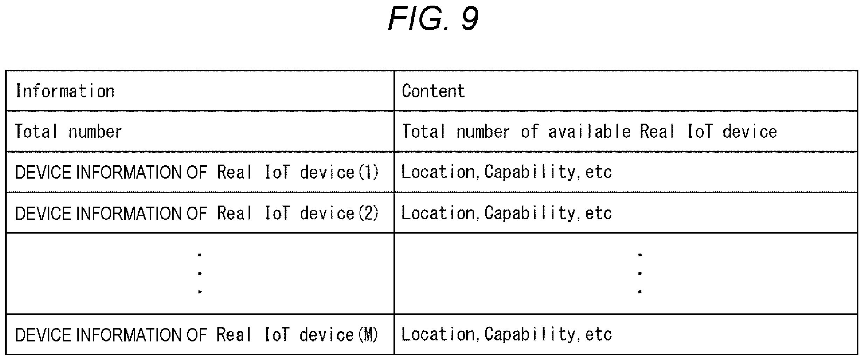

In the configuration of Fig. 8, in step S16 of Fig. 6, the disclosure unit 62 of the virtual IoT device management unit 31 discloses device information as shown in Fig. 9 to the user equipment 40. The presentation unit 72 of the user equipment 40 presents the device information disclosed by the disclosure unit 62, to the user 40A.

The device information in Fig. 9 includes a total number, device information of real IoT device (1), device information of real IoT device (2), ···, and device information of real IoT device (M).

The total number represents a total number of real IoT devices of a region (installation location) or a type (a capability) corresponding to a request from the user equipment 40.

The device information of each real IoT device includes an installation location, a capability, and the like of the real IoT device. Moreover, the device information may also include a provider or the like of the real IoT device.

The user 40A can select a plurality of real IoT devices from options (device information) of the real IoT device presented by the user equipment 40.

That is, in the configuration of Fig. 8, in step S17 of Fig. 6, the user equipment 40 requests the virtual IoT device management unit 31 for linkage between one virtual IoT device and the N pieces of the real IoT device 10 selected by the user 40A.

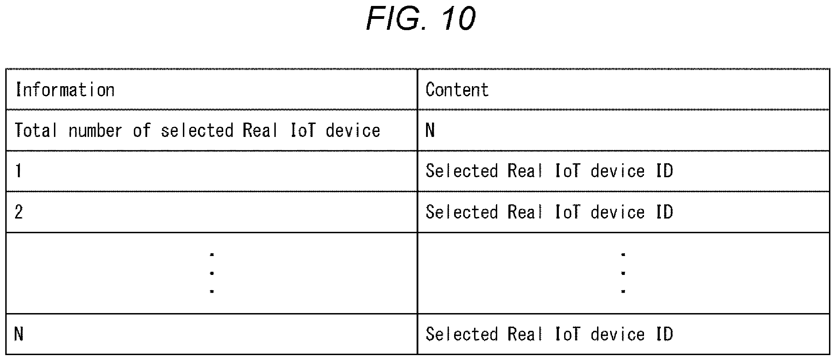

Fig. 10 is a view showing an example of information of a selected real IoT device, to be transmitted to the virtual IoT device management unit 31 as a request from the user equipment 40.

The information in Fig. 10 includes a total number of selected real IoT devices and an ID of each of the selected real IoT devices.

In the example of Fig. 10, the total number of the selected real IoT devices is N, and values 1, 2, ···, and N are the ID of the selected real IoT device (1), the ID of real IoT device (2), ···, and the ID of real IoT device (N).

In this way, the linkage between one virtual IoT device 50 and real IoT device (1), real IoT device (2), ···, and real IoT device (N) is requested to the virtual IoT device management unit 31.

Thereafter, when the one virtual IoT device 50 is activated, the N pieces of the real IoT device 10 are linked with the one virtual IoT device 50, and position information of the linked virtual IoT device 50 is notified to each of the N pieces of the real IoT device 10.

In this case, the virtual IoT device 50 can store data from each of the N pieces of the real IoT device 10 for each real IoT device 10, by distinguishing with an IP address or a MAC address of a transmission source. At this time, the virtual IoT device 50 holds time information at which the data has been most recently updated for each real IoT device 10.

According to the configuration described above, the user 40A can acquire data of a plurality of real IoT devices 10 by accessing the one virtual IoT device 50. In particular, in a case where the virtual IoT device 50 is arranged at a network edge, unlike a case of accessing data aggregated in a server arranged at a center, data can be acquired with a small delay as if the data of the real IoT device 10 is being directly accessed.

### (2-3. GUI used for linkage request)

In the example described above, when the linkage between the real IoT device 10 and the virtual IoT device 50 is requested, the user 40A needs to describe a linkage request in a data format such as extensible markup language (XML) or JavaScript (registered trademark) object notation (JSON).

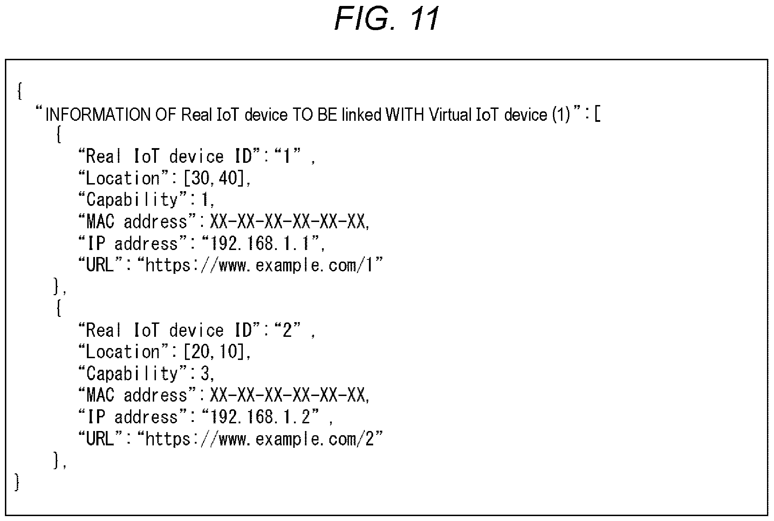

Fig. 11 is a view showing a description example of the linkage request using JSON.

In the example of Fig. 11, a request for linkage of real IoT device (1) and real IoT device (2) with virtual IoT device (1) is described.

Specifically, in Fig. 11, an ID, an installation location, a classification indicating a capability, a MAC address, an IP address, and a URL of the real IoT device are described as information of each of real IoT device (1) and real IoT device (2).

However, it is not easy for the user 40A to directly edit a file in such a data format.

Therefore, the linkage request between the real IoT device 10 and the virtual IoT device 50 is performed using a graphical user interface (GUI).

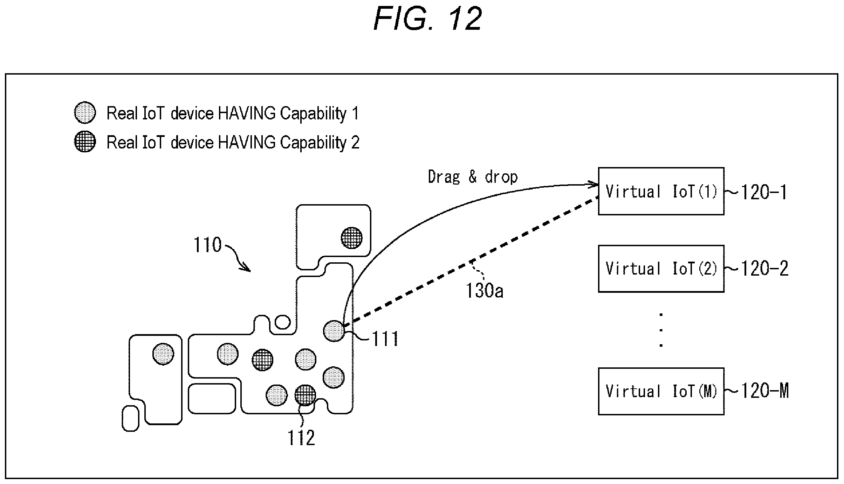

Fig. 12 is a view showing an example of a GUI used for the linkage request. The GUI in Fig. 12 is displayed on a monitor configured as the presentation unit 72 of the user equipment 40.

On a left side of a screen shown in Fig. 12, a map 110 is displayed.

At a position corresponding to an installation location of the real IoT device 10 on the map 110, circular icons 111 and 112 are displayed. The icons 111 and 112 are displayed in different colors for individual capabilities of the individually corresponding real IoT devices 10. In the example of Fig 12, the icon 111 indicates the real IoT device 10 having capability 1, and the icon 112 indicates the real IoT device 10 having capability 2.

The icons 111 and 112 on the map 110 are displayed in a position and a color based on device information corresponding to each of the real IoT devices 10 from the server 30 (virtual IoT device management unit 31).

On a right side of the monitor shown in Fig. 12, rectangular icons 120-1, 120-2, ···, and 120-M are displayed. The icons 120-1, 120-2, ···, and 120-M indicate M pieces of virtual IoT device (1), (2), ···, and (M), respectively.

In response to an operation by the user 40A on the screen of Fig. 12, specifically, drag and drop of the icon 111 on the icon 120-1, linkage between the real IoT device 10 corresponding to the icon 111 and virtual IoT device (1) is requested. At this time, between the icon 111 and the icon 120-1 shown in Fig. 12, a predetermined line 130a connecting each other is displayed. In the example of Fig. 12, the line 130a is indicated by a broken line.

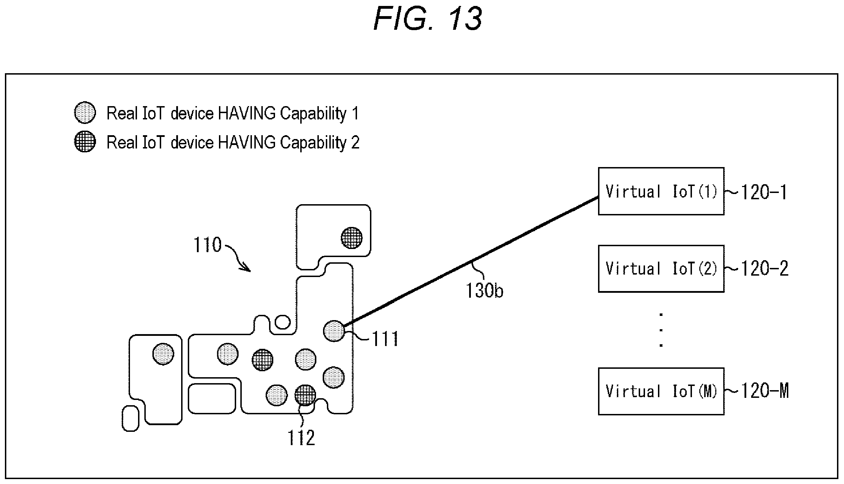

In a case where the linkage by the virtual IoT device management unit 31 is established, the line 130a is changed and displayed as a different line 130b as shown in Fig. 13. In the example of Fig. 13, the line 130b is indicated by a solid line.

In the examples of Figs. 12 and 13, in a case where the linkage is established, the line type of the line connecting the icon 111 and the icon 120-1 is changed. However, for example, a color of the line may be changed such that the color of the line is changed from red to blue, or a thickness of the line may be changed.

According to such a GUI, the user 40A can intuitively grasp the installation location and the capability (data type) of the real IoT device.

Furthermore, the user 40A can request the linkage between the real IoT device 10 and the virtual IoT device 50 by a simple operation such as drag and drop, without describing a file in a data format such as JSON.

Moreover, the user 40A can intuitively grasp whether or not the linkage has been established, by the change in the line indicating the linkage request.

Note that, without limiting to one real IoT device 10 installed at an installation location corresponding to the position on the map 110 and having a capability corresponding to the color, the icon 111 and the icon 112 may represent a plurality of real IoT devices 10 installed in the vicinity.

### (2-4. 1:N linkage of virtual IoT device)

There may be a case where a plurality of users requests sharing of one real IoT device 10. Since a place where the real IoT device 10 is installed is limited, a benefit of sharing the real IoT device 10 is great. Furthermore, the sharing of the real IoT device 10 leads to reduction in an installation cost of the real IoT device 10, and eventually, reduction in a use cost of the user.

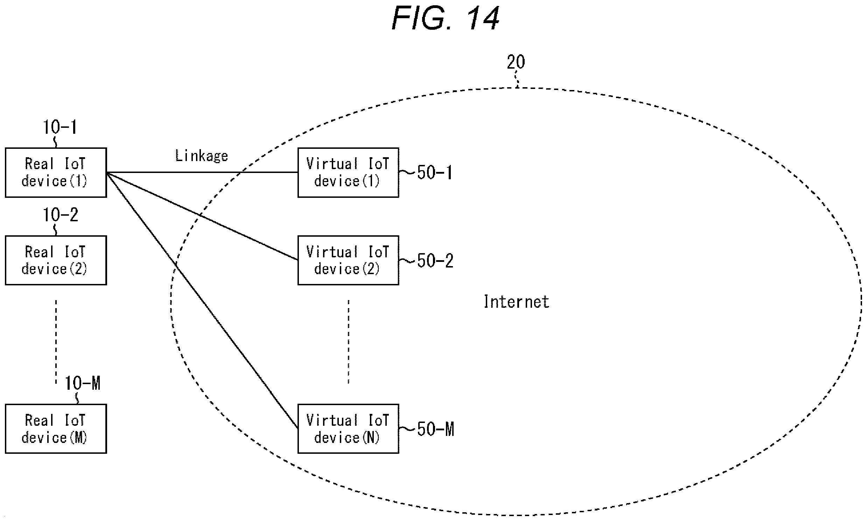

Therefore, as shown in Fig. 14, by linking a plurality of virtual IoT devices 50 with one real IoT device 10, a plurality of users 40A can share one real IoT device 10.

In the example of Fig. 14, 1:N linkage is made between one real IoT device 10-1 and N pieces of virtual IoT device 50-1, 50-2, ···, and 50-N on the Internet 20. In other words, in the example of Fig. 14, the N pieces of virtual IoT device 50 are activated by N pieces of the user equipment 40. The N pieces of virtual IoT device 50-1, 50-2, ···, and 50-N are arranged at different positions on the Internet 20.

### (Flow of linkage)

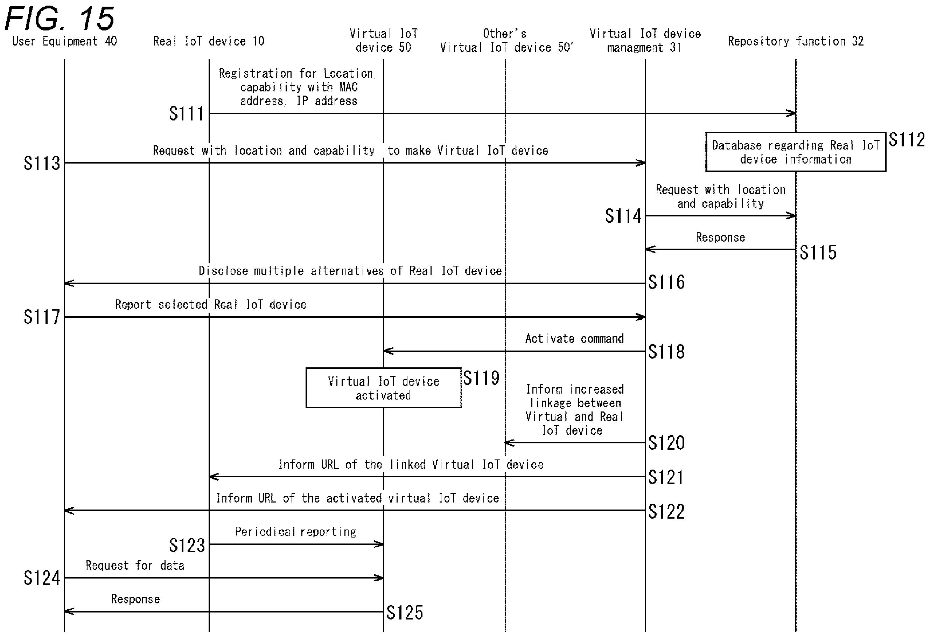

Fig 15 is a view for explaining a flow of linkage between the virtual IoT device 50 and the real IoT device 10 that is already linked with another virtual IoT device 50'.

The individual processes of steps S111 to S119 and S121 to S125 in Fig. 15 are basically performed similarly to the individual processes of steps S11 to S24 in Fig. 6.

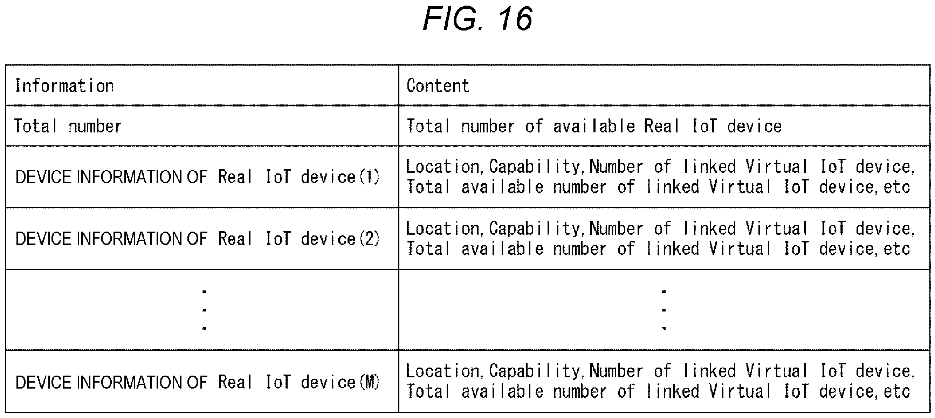

However, in the configuration of Fig. 14, in step S116 of Fig. 15, the disclosure unit 62 of the virtual IoT device management unit 31 discloses device information as shown in Fig. 16, to the user equipment 40. The presentation unit 72 of the user equipment 40 presents the device information disclosed by the disclosure unit 62, to the user 40A.

Similarly to the device information of Fig. 9 described above, the device information in Fig. 16 includes a total number, device information of real IoT device (1), device information of real IoT device (2), ···, and device information of real IoT device (M).

However, in addition to the installation location and the capability of the real IoT device, the device information of each real IoT device includes a number of virtual IoT devices already linked with the real IoT device, and a total number of virtual IoT devices that can be linked with the real IoT device.

Typically, a timing at which each user equipment 40 requests linkage between the real IoT device and the virtual IoT device is different. At this time, by presenting the device information as shown in Fig. 16, the user 40A can grasp a load of the real IoT device at that time.

That is, in the configuration in Fig. 14, in step S117 in Fig. 15, the user equipment 40 requests the virtual IoT device management unit 31 for linkage between one virtual IoT device and the real IoT device 10 selected by the user 40A and already linked with another virtual IoT device 50'.

Such a load of the real IoT device may be presented graphically.

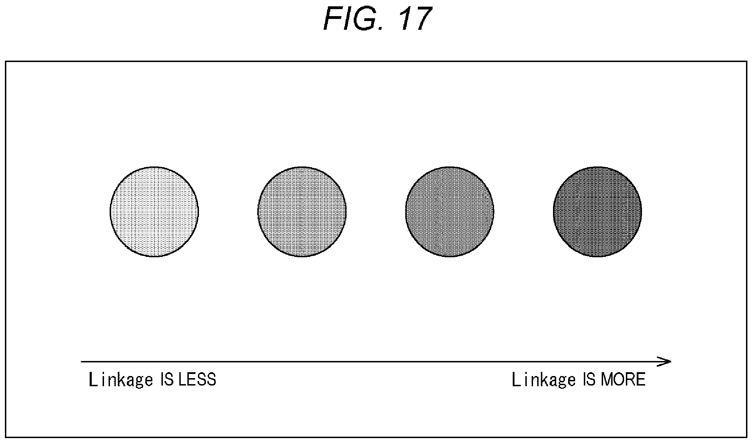

Fig. 17 is a view showing a presentation example of a load of the real IoT device.

As shown in Fig. 17, a load of the real IoT device, that is, the number of virtual IoT devices already linked with the real IoT device may be represented by a color density of a circular icon.

It is assumed that this icon represents one real IoT device 10, and may be, for example, displayed at a position corresponding to the installation location on the map 110, like the icons 111 and 112 described with reference to Figs. 12 and 13.

The example of Fig. 17 indicates that, as the color of the icon is darker, the number of virtual IoT devices already linked with the real IoT device 10 is larger, and the load is larger.

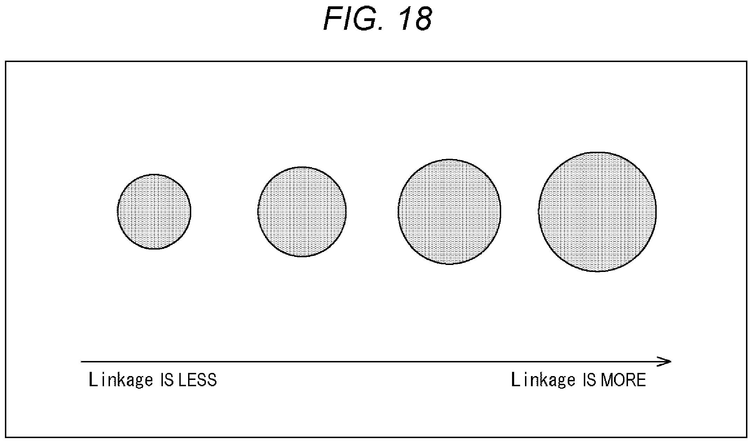

Fig. 18 is a view showing another presentation example of a load of the real IoT device.

As shown in Fig. 18, a load of the real IoT device, that is, the number of virtual IoT devices already linked with the real IoT device may be represented by a size of a circular icon.

The example of Fig. 18 indicates that, as the size of the icon is larger, the number of virtual IoT devices already linked with the real IoT device 10 is larger, and the load is larger.

In the examples of Figs. 17 and 18, a shape of the icon is circular, but may be another shape such as a rectangle or a star.

Note that magnitude of the load may be represented by a difference in color or a difference in shape, without limiting to the color density and the size of the icon, or the number of virtual IoT devices already linked with the real IoT device may be displayed on the icon.

Now, returning to the description of Fig. 15, after the virtual IoT device 50 is activated in steps S118 and S119, the informing unit 64 of the virtual IoT device management unit 31 may inform another virtual IoT devices 50', in step S120, that the linkage between the real IoT device 10 and the virtual IoT device 50 has increased.

According to the processing described above, the user 40A can determine whether or not to arrange the virtual IoT device 50 to be linked with the real IoT device 10, in consideration of a load state of the real IoT device 10.

### (2-5. Linkage of virtual IoT device by L2 connection)

In a case where one real IoT device 10 is linked with N pieces of the virtual IoT device 50, the real IoT device 10 is to individually notify the N pieces of the virtual IoT device 50 of collected data. In this case, since the real IoT device 10 needs to transmit packets N times, power consumption increases as the number of linked virtual IoT devices 50 increases.

In the following, a description is given to a configuration for suppressing an increase in power consumption even in a case where one real IoT device 10 is linked with the N pieces of the virtual IoT device 50.

In an IoT system in which 1:N linkage is made between the real IoT device 10 and the virtual IoT device 50, it is desirable to broadcast in a case where data transmitted to the N pieces of the virtual IoT device 50 is the same. For this purpose, the one real IoT device 10 and the N pieces of the virtual IoT device 50 are connected to the same segment, and broadcast packets are to be transmitted.

The segment is a range in which the devices can communicate with each other only with a MAC address without passing through a router. In a case where the devices cannot communicate with each other only with the MAC address, the packet is routed via the router with an IP address.

As described above, it can be said that the devices connected to the same segment are in Layer 2 connection (L2 connection).

Meanwhile, there is a technology called a virtual extensible local area network (VXLAN). The VXLAN is a technology capable of handling devices belonging to different segments across routers as if belonging to the same segment, by virtually L2-connecting the devices.

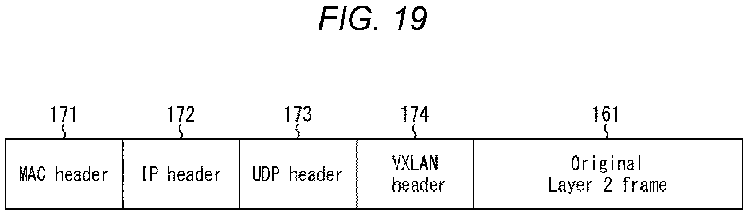

In the VXLAN, as shown in Fig. 19, an original Layer 2 frame (Ethernet (registered trademark) frame) 161 on a transmit side is added with a MAC header 171, an IP header 172, a UDP header 173, and a VXLAN header 174, and encapsulated with UDP/IP. This configuration enables packet transmission beyond a Layer 3 network.

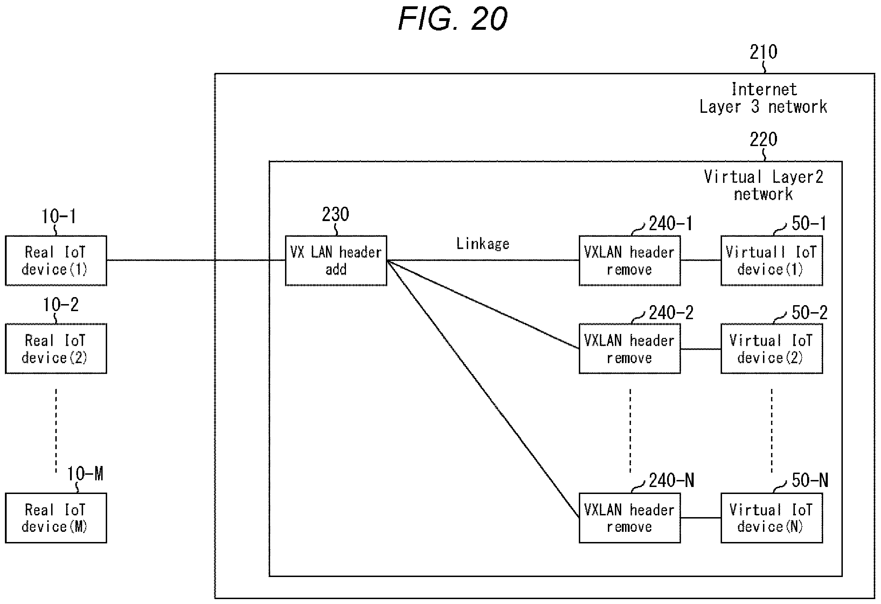

By using such a VXLAN technology, as shown in Fig. 20, one real IoT device 10 and the N pieces of the virtual IoT device 50 can be virtually connected to the same segment, and packets can be broadcast.

In the example of Fig 20, 1:N linkage is made between one real IoT device 10-1 and N pieces of the virtual IoT device 50-1, 50-2, ···, 50-N on a virtual Layer 2 network 220 overlaid on a Layer 3 network 210.

In the vicinity of the real IoT device 10-1 on the virtual Layer 2 network 220, a header addition unit 230 configured to add a VXLAN header to a packet and encapsulates the packet is arranged. Furthermore, in the vicinity of the individual virtual IoT devices 50, header removal units 240-1, 240-2, ···, and 240-N configured to remove the VXLAN header from the packet and supply to the virtual IoT device 50 are arranged.

The real IoT device 10 and the virtual IoT device 50 existing in the virtual Layer 2 network 220 may transmit packets on the basis of the MAC address of Layer 2. Therefore, even if the IP address is changed by movement of the real IoT device 10 or the virtual IoT device 50, communication can be continued.

### (Flow of linkage)

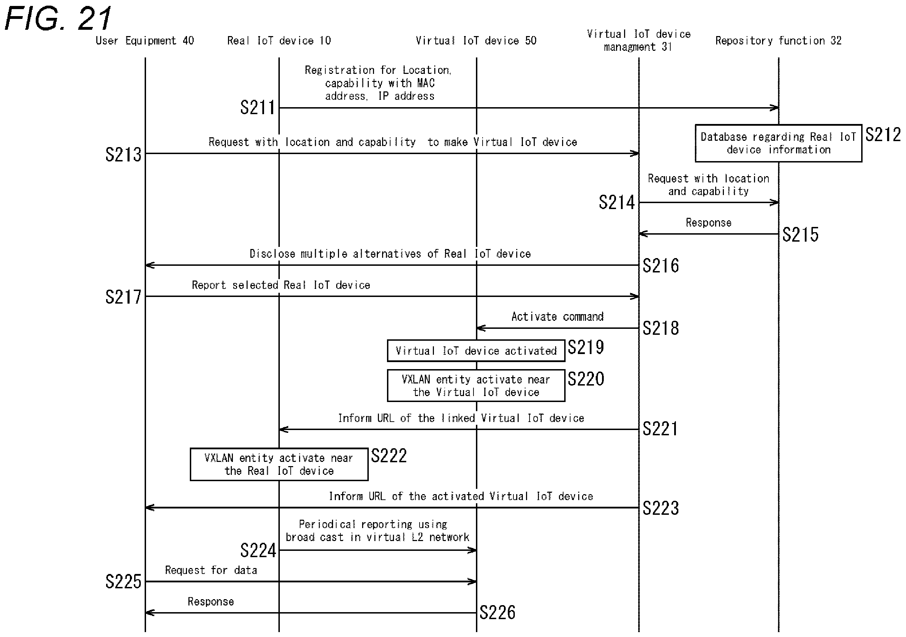

Fig. 21 is a view for explaining a flow of linkage between the real IoT device 10 and the virtual IoT device 50 by using the VXLAN technology.

The individual processes of steps S211 to S219, S221, S223, S225, and S226 in Fig. 21 are basically performed similarly to the individual processes of steps S111 to S119, S121, S122, S124, and S125 in Fig. 15.

That is, the virtual IoT device 50 is activated in step S219, and also activates a VXLAN entity (specifically, a header removal unit 240) in the vicinity of the virtual IoT device 50 on the Layer 3 network 210, in step S220.

Furthermore, when a URL of the virtual IoT device 50 is notified in step S221, the real IoT device 10 activates a VXLAN entity (specifically, the header addition unit 230) in the vicinity of the real IoT device 10 on the Layer 3 network 210, in step S222.

In this manner, the real IoT device 10 and the virtual IoT device 50 are L2-connected virtually. With this configuration, in step S224, the real IoT device 10 can periodically broadcast the collected data to the virtual IoT device 50 on the virtual Layer 2 network 220.

According to the above processing, in a case of linkage with the N pieces of the virtual IoT device 50, since the real IoT device 10 can broadcast the collected data without individually notifying the N pieces of the virtual IoT device 50, it is possible to suppress an increase in power consumption.

Note that the L2-connection between the real IoT device 10 and the virtual IoT device 50 using the VXLAN technology can also be applied to 1:1 linkage or N:1 linkage.

### (2-6. New installation of real IoT device)

As described above, after the real IoT device 10 is linked with the virtual IoT device 50 and operation is started, a more appropriate real IoT device than the real IoT device 10 currently linked with the virtual IoT device 50 may be newly installed.

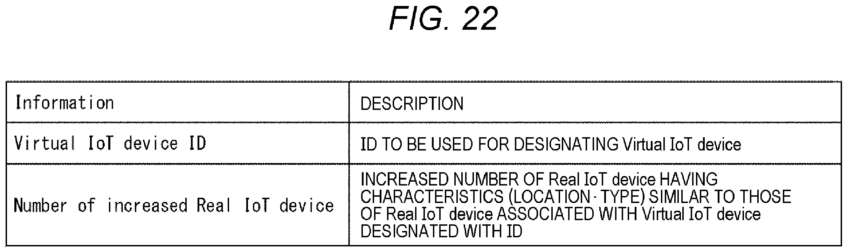

In such a case, the disclosure unit 62 of the virtual IoT device management unit 31 discloses new installation information of the real IoT device as shown in Fig. 22, to the user equipment 40. Then, the presentation unit 72 of the user equipment 40 presents the new installation information of the real IoT device disclosed by the disclosure unit 62, to the user 40A.

The new installation information of the real IoT device in Fig. 22 includes a virtual IoT device ID and the number of newly installed real IoT devices.

The virtual IoT device ID represents an ID used to designate the virtual IoT device 50.

The number of newly installed real IoT devices indicates the number (increased number) of newly installed real IoT devices designated by the virtual IoT device ID and having a characteristic similar to that of the real IoT device 10 linked with the virtual IoT device 50. The characteristic here is at least one of an installation location or a capability of the real IoT device 10 linked with the virtual IoT device 50.

By presenting such new installation information of the real IoT device to the user 40A, the user 40A can construct linkage with the more appropriate real IoT device, and thus can acquire more desired data.

### <3. Second embodiment>

### (3-1. Linkage of virtual IoT device in hierarchical structure)

In the embodiment described above, in a case where linkage between the real IoT device and the virtual IoT device is constructed, the user needs to perform some operation on all the linkage, which requires time and effort. In particular, in a case where the number of real IoT devices increases, it is complicated to directly manage the linkage between the real IoT device and the virtual IoT device.

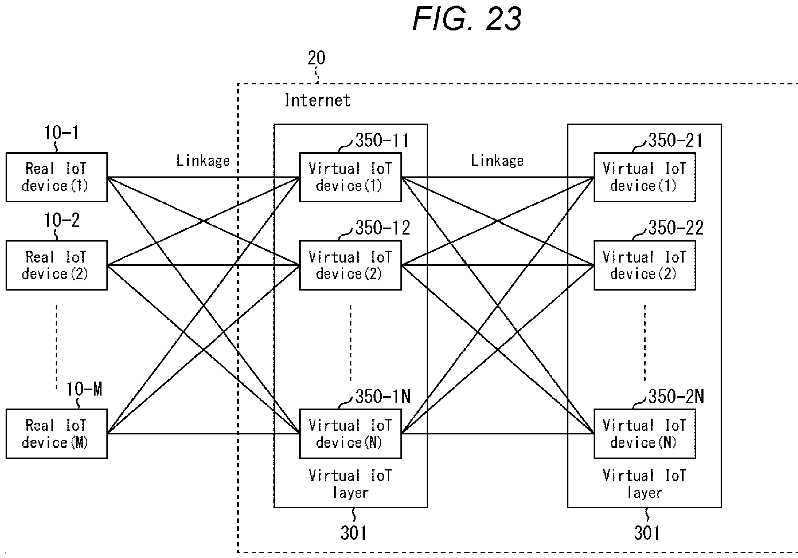

Therefore, as shown in Fig. 23, by linking between the virtual IoT devices in a hierarchical structure, it is possible to save the user's time and effort.

In the example of Fig. 23, M pieces of the real IoT device 10-1, 10-2, ···, and 10-M are linked with virtual IoT devices belonging to a virtual IoT Layer 301 on an Internet 20. In the virtual IoT Layer 301, N pieces of virtual IoT device 350-11, 350-12, ···, and 350-1N are installed and are each linked with the real IoT devices 10-1, 10-2, ···, and 10-M.

Moreover, in the example of Fig. 23, virtual IoT devices belonging to the virtual IoT Layer 301 are linked with virtual IoT devices (upper hierarchy devices) belonging to a virtual IoT Layer 302 of an upper hierarchy thereof. In the virtual IoT Layer 302, N pieces of virtual IoT device 350-21, 350-22, ···, 350-2N are installed, and are linked with the virtual IoT devices 350-11, 350-12, ···, 350-1N of a lower hierarchy.

In this way, in the present embodiment, the virtual IoT devices are linked in a hierarchical structure.

Note that, in the following description, it is assumed that the real IoT devices 10-1, 10-2, ···, and 10-M are also included in this hierarchical structure. In other words, it is assumed that the real IoT devices 10-1, 10-2, ···, and 10-M are installed in the lowest hierarchy (a 0-th hierarchy), and the virtual IoT devices 350-11, 350-12, ···, and 350-1N are installed in the virtual IoT Layer 301 of an upper hierarchy thereof (a first hierarchy).

Furthermore, in the following description, the virtual IoT device 350-1N and the virtual IoT device 350-2N are simply referred to as a virtual IoT device 350. Moreover, the real IoT device 10 or the virtual IoT device 350 of the lower hierarchy will be collectively referred to as an IoT device 350L, and the virtual IoT device of the upper hierarchy will be referred to as 350H.

### (Flow of linkage)

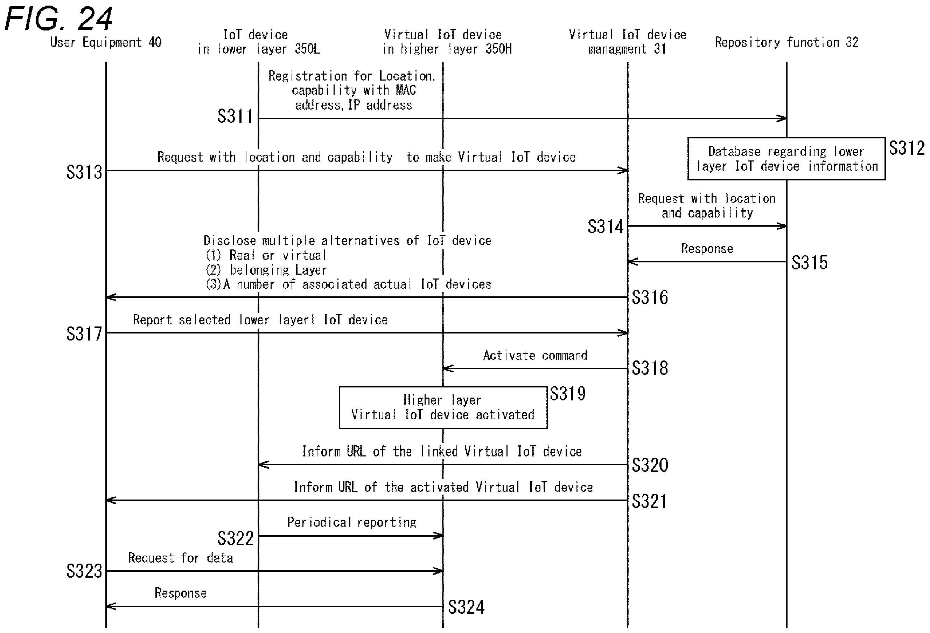

Fig. 24 is a view for explaining the IoT device 350L of the lower hierarchy and the virtual IoT device of the upper hierarchy in Fig. 23, for a flow of linkage of 350H.

Each process of Fig. 24 is performed basically in a similar manner to each process of Fig. 6.

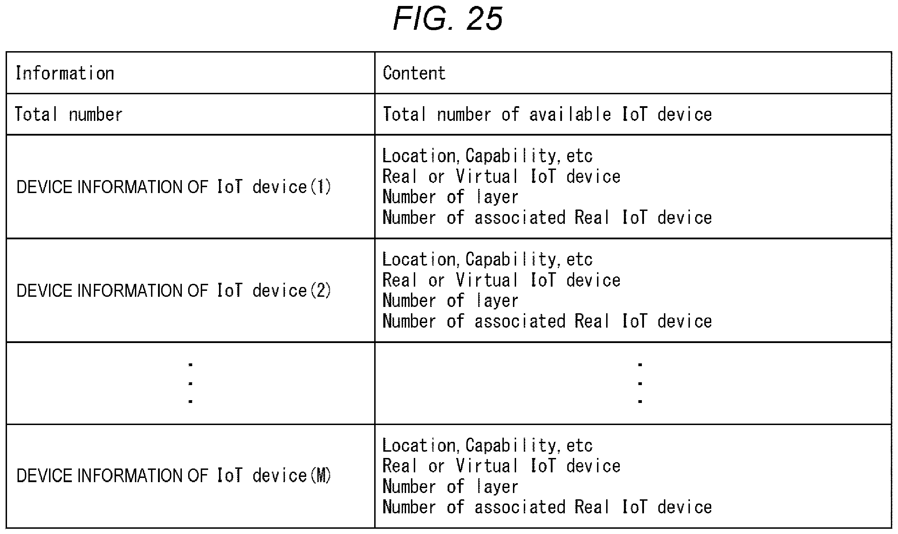

However, in the configuration of Fig. 23, in step S316 of Fig. 24, a disclosure unit 62 of a virtual IoT device management unit 31 discloses device information as shown in Fig. 25, to user equipment 40. A presentation unit 72 of the user equipment 40 presents the device information disclosed by the disclosure unit 62, to a user 40A.

The device information in Fig. 25 includes a total number, respective pieces of device information of IoT device (1), IoT device (2), ···, and IoT device (M) to be linked with the virtual IoT device 350H of the upper hierarchy.

The device information of each IoT device includes, in addition to an installation location and a capability of the IoT device, whether the IoT device is a real IoT device or a virtual IoT device, a hierarchy to which the IoT device belongs, and the number of real IoT devices belonging to a hierarchy under the IoT device.

For example, in a case where the IoT device is the real IoT device 10, the hierarchy to which the IoT device belongs is 0, and the number of real IoT devices belonging to the hierarchy under the IoT device is also 0.

Furthermore, in a case where the IoT device is a virtual IoT device directly linked with two real IoT devices 10, the hierarchy to which the IoT device belongs is 1, and the number of real IoT devices belonging to the hierarchy under the IoT device is 2.

The user 40A can select the IoT device 350L to be linked with the virtual IoT device 350H of the upper hierarchy, from options (device information) of the IoT device presented by the user equipment 40.

That is, in the configuration of Fig. 23, in step S317 of Fig. 24, the user equipment 40 requests the virtual IoT device management unit 31 for linkage between the IoT device 350L selected by the user 40A and the virtual IoT device 350H.

In step S318, the activation unit 63 of the virtual IoT device management unit 31 activates the virtual IoT device 350H of the upper hierarchy, in response to a request from the user equipment 40.

With this configuration, in step S319, the virtual IoT device 350H of the upper hierarchy is activated. As a result, the IoT device 350L selected by the user 40A is linked with the virtual IoT device 350H of the upper hierarchy.

Thereafter, in step S320, an informing unit 64 of the virtual IoT device management unit 31 informs the IoT device 350L of a URL of the virtual IoT device 50, as position information of the linked virtual IoT device 350H.

Similarly, in step S321, the informing unit 64 of the virtual IoT device management unit 31 also informs the user equipment 40 of a URL of the linked virtual IoT device 350H.

In the IoT device 350L, the URL of the virtual IoT device 350H is stored as a transmission destination of data collected by the self or collected by the real IoT device 10 of the lower hierarchy. In other words, in step S322, the IoT device 350L periodically transmits the collected data to the virtual IoT device 350H.

In the user equipment 40, the URL of the virtual IoT device 350H of the upper hierarchy is stored as a request destination of data collected by the IoT device 350L. In other words, in step S323, a request unit 73 of the user equipment 40 requests the data collected by the IoT device 350L, from the virtual IoT device 350H of the upper hierarchy. In step S324, the virtual IoT device 350H of the upper hierarchy transmits the requested data to the user equipment 40.

According to the above processing, the user 40A can newly arrange the virtual IoT device 350 in an upper hierarchy of the real IoT device 10 and the virtual IoT device 350 that are currently arranged.

With this configuration, while reducing the number of times of access to one virtual IoT device 350, it is possible to collect more data by one access as the hierarchy to which the virtual IoT device 350 belongs is higher. Note that, as the hierarchy to which the virtual IoT device 350 belongs is lower, data closer to RAW data can be collected.

Furthermore, more processed data can be collected as the hierarchy to which the virtual IoT device 350 belongs is higher, and data with a higher update frequency can be collected as the hierarchy to which the virtual IoT device 350 belongs is lower.

In this way, by linking the virtual IoT device 350 in the hierarchical structure, it is possible to construct a large number of routes to collect data of the real IoT device 10 without performing individual operations on the linkage between the real IoT device 10 and the virtual IoT device 350, and desired data can be acquired as a result.

Furthermore, by linking the virtual IoT device 350 in the hierarchical structure, the virtual IoT device 350 may be arranged in an appropriate server at a required location as compared with a case where a server arranged on a back side of the Internet 20 centrally manages linkage, and traffic in the network can be reduced.

By the hierarchical structure of the virtual IoT device 350, when an IoT service provider acquires data of each region, it is possible to select whether to access the virtual IoT device 350 capable of collecting data on a municipal basis or to access the virtual IoT device 350 capable of collecting data on a prefecture basis.

For example, by accessing the virtual IoT device 350 of the upper hierarchy, the IoT service provider that provides weather information can acquire all temperatures on a prefecture basis by one access. Whereas, the IoT service provider can acquire a temperature of a specific region at a high update frequency by accessing the virtual IoT device 350 of the lower hierarchy.

### (3-2. GUI used for linkage request)

In the example described above, the installation location and the capability of the virtual IoT device 350 are disclosed as the device information. In a case where a plurality of IoT devices 350L is installed in a lower hierarchy of the virtual IoT device 350, device information of all the IoT devices 350L belonging to the lower hierarchy also needs to be disclosed as the device information.

However, it is complicated to disclose the device information of all the IoT devices 350L belonging to the lower hierarchy.

Therefore, a request for linkage between the IoT device 350L of the lower hierarchy and the virtual IoT device 350H of the upper hierarchy is performed using a GUI.

### (Example 1 of GUI)

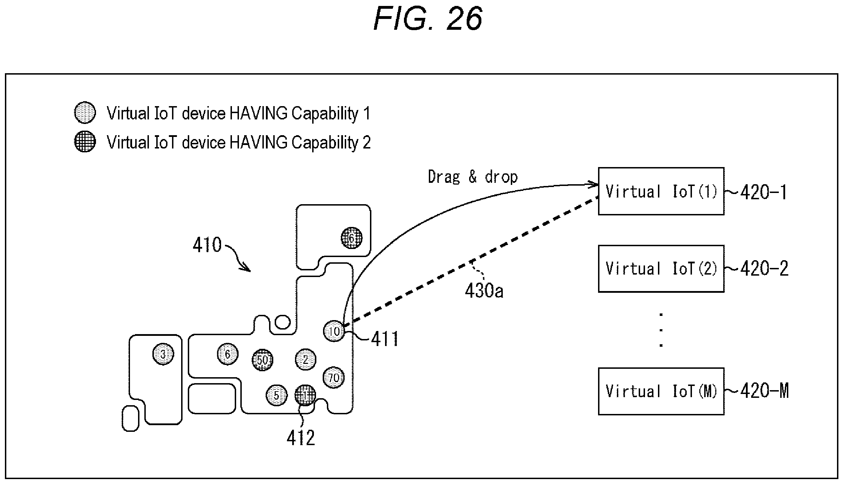

Fig. 26 is a view showing an example of a GUI used for a linkage request. The GUI in Fig. 26 is displayed on a monitor configured as the presentation unit 72 of the user equipment 40.

On a left side of a screen shown in Fig. 26, a map 410 is displayed.

At a position corresponding to an installation location of the virtual IoT device 350 on the map 410, circular icons 411 and 412 are displayed. The icons 411 and 412 are displayed in different colors for individual capabilities of the individually corresponding virtual IoT devices 350. In the example of Fig 26, the icon 411 indicates the virtual IoT device 350 having capability 1, and the icon 412 indicates the virtual IoT device 350 having capability 2.

The icons 411 and 412 on the map 410 are displayed in a position and a color based on device information corresponding to each of the virtual IoT devices 350 from the server 30 (virtual IoT device management unit 31).

Furthermore, on the icons 411 and 412, the number of real IoT devices 10 belonging to a hierarchy under the corresponding virtual IoT device 350 is displayed. The number displayed on the icon 411 or the icon 412 represents the number of the plurality of real IoT devices 10 installed at an installation location corresponding to a position on the map 410 and having a capability corresponding to the color. The number of real IoT devices 10 is also displayed on the basis of device information corresponding to each of the virtual IoT devices 350 from the server 30.

As described above, the IoT devices 350L that can belong to a hierarchy under one virtual IoT device 350H are to be the real IoT device 10 and the virtual IoT device 350 individually installed in the same installation location and having the same capability.

Note that the number displayed on the icon 411 or the icon 412 may include the number of virtual IoT devices 350 belonging to a hierarchy under the corresponding virtual IoT device 350H.

Furthermore, the device information from the server 30 may be provided as a file in a data format such as XML or JSON.

On a right side of the screen shown in Fig. 26, rectangular icons 420-1, 420-2, ···, and 420-M are displayed. The icons 420-1, 420-2, ···, and 420-M indicate M pieces of virtual IoT device (1), (2), ···, and (M) installed in an upper hierarchy, respectively.

In response to an operation by the user 40A on the monitor of Fig. 26, specifically, drag and drop of the icon 411 on the icon 420-1, linkage between the virtual IoT device 350 corresponding to the icon 411 and virtual IoT device (1) of an upper hierarchy is requested. At this time, between the icon 411 and the icon 420-1 shown in Fig. 26, a predetermined line 430a connecting each other is displayed. In the example of Fig. 26, the line 430a is indicated by a broken line.

In a case where the linkage by the virtual IoT device management unit 31 is established, the line 430a is changed and displayed as a line of a different line type, although not illustrated.

In the example of Fig. 26, in a case where the linkage is established, the line type of the line connecting the icon 411 and the icon 420-1 is changed. However, for example, a color of the line may be changed such that the color of the line is changed from red to blue, or a thickness of the line may be changed.

Note that, in the example of Fig. 26, the icons 411 and 412 are displayed in different colors for individual capabilities of the individually corresponding virtual IoT devices 350, but may be displayed in different sizes or different shapes.

According to such a GUI, the user 40A can intuitively grasp the installation location and the capability of the virtual IoT device 350 to be linked with the virtual IoT device 350 of the upper hierarchy, and also the number of real IoT devices 10 belonging to a subordinate hierarchy.

### (Example 2 of GUI)

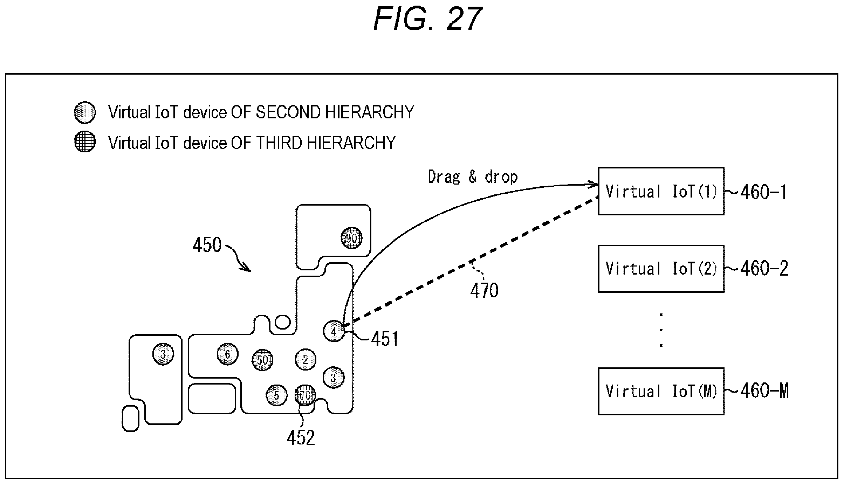

Fig. 27 is a view showing another example of a GUI used for a linkage request. The GUI in Fig 27 is also displayed on a monitor configured as the presentation unit 72 of the user equipment 40.

On a left side of a screen shown in Fig. 27, a map 450 is displayed.

At a position corresponding to an installation location of the virtual IoT device 350 on the map 450, circular icons 451 and 452 are displayed. The icons 451 and 452 are displayed in different colors for individual hierarchies to which the individually corresponding virtual IoT devices 350 belong. In the example of Fig. 27, the icon 451 indicates the virtual IoT device 350 belonging to a second hierarchy, and the icon 452 indicates the virtual IoT device 350 belonging to a third hierarchy.

The icons 451 and 452 on the map 450 are displayed in a position and a color based on device information corresponding to each of the virtual IoT devices 350 from the server 30 (virtual IoT device management unit 31).

Furthermore, on the icons 451 and 452, the number of real IoT devices 10 belonging to a hierarchy under the corresponding virtual IoT device 350 is displayed. The number displayed on the icon 451 or the icon 452 represents the number of a plurality of real IoT devices 10 installed at an installation location corresponding to the position on the map 450 and having the same capability. The number of real IoT devices 10 is also displayed on the basis of device information corresponding to each of the virtual IoT devices 350 from the server 30.

In the example of Fig. 27, since the virtual IoT device 350 corresponding to the icon 451 belongs to an upper hierarchy than the virtual IoT device 350 corresponding to the icon 452, the number displayed on the icon 452 is larger than the number displayed on the icon 451.

Note that the number displayed on the icon 451 or the icon 452 may include the number of virtual IoT devices 350 belonging to a hierarchy under the corresponding virtual IoT device 350.

On a right side of the screen shown in Fig. 27, rectangular icons 460-1, 460-2, ···, and 460-M are displayed. The icons 460-1, 460-2, ···, and 460-M indicate M pieces of virtual IoT device (1), (2), ···, and (M) installed in an upper hierarchy, respectively.

Also in the example of Fig. 27, similarly to the example of Fig. 26, linkage between the virtual IoT device 350 corresponding to the icon 451 or the icon 452 and virtual IoT device (1) of the upper hierarchy corresponding to the icon 460-1 is requested.

Note that, in the example of Fig. 27, the icons 451 and 452 are displayed in different colors for individual hierarchies to which the individually corresponding virtual IoT devices 350 belong, but may be displayed in different sizes or different shapes.

According to such a GUI, the user 40A can intuitively grasp the installation location of the virtual IoT device 350 to be linked with the virtual IoT device 350 of the upper hierarchy, the hierarchy the virtual IoT device 350 belongs to, and also the number of real IoT devices 10 belonging to a subordinate hierarchy.

### (3-3. Linkage of virtual IoT device with plurality of ports)

In the above description, it has been assumed that the IoT devices 350L linked in a lower hierarchy of one virtual IoT device 350H are the real IoT device 10 and the virtual IoT device 350 having the same installation location and the same capability.

However, in order to be able to collect data of various regions and data of various types from one virtual IoT device 350H, linkage with the IoT devices 350L having different installation locations or different capabilities may be requested in a lower hierarchy.

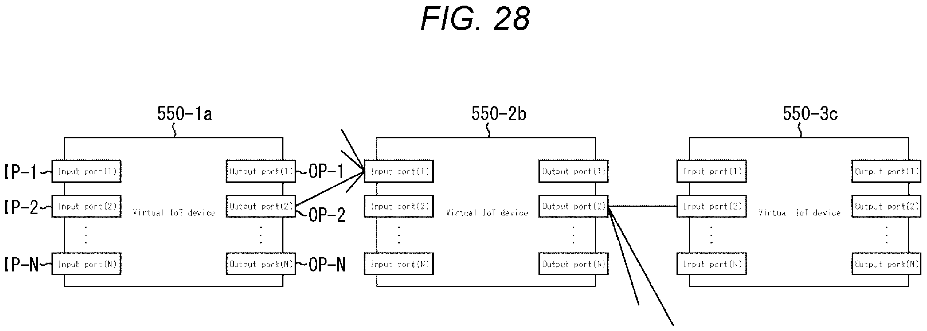

Therefore, as shown in Fig. 28, by providing a plurality of output ports in the virtual IoT device, it is possible to link IoT devices having different installation locations or different capabilities in a lower hierarchy.

In the example of Fig. 28, a virtual IoT device 550-1a belonging to a first hierarchy, a virtual IoT device 550-2b belonging to a second hierarchy, and a virtual IoT device 550-3c belonging to a third hierarchy (hereinafter, also simply referred to as a virtual IoT device 550) are linked in a hierarchical structure.

The virtual IoT device 550 individually includes N pieces of output port OP-1, OP-2, ···, and OP-N (hereinafter, also simply referred to as an output port OP). The output port OP is provided for each characteristic of data to be handled.

Furthermore, the virtual IoT device 550 individually includes N pieces of input port IP-1, IP-2, ···, and IP-N (hereinafter, also simply referred to as an input port IP). The input port IP is also provided for each characteristic of data to be handled.

The characteristic here is an installation location and a capability of the real IoT device 10 that has acquired data.

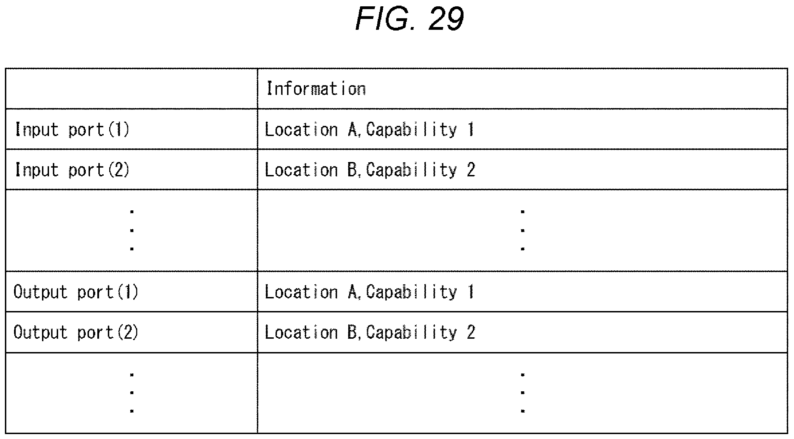

Fig. 29 is a view showing an example of port information of the input port and the output port included in the virtual IoT device 550.

According to the port information in Fig. 29, input port (1) (the input port IP-1) inputs data acquired by the real IoT device 10 having capability 1 at installation location A, and input port (2) (the input port IP-2) inputs data acquired by the real IoT device 10 having capability 2 at installation location B.

Furthermore, output port (1) (the output port OP-1) outputs data acquired by the real IoT device 10 having capability 1 at installation location A, and output port (2) (the output port OP-2) outputs data acquired by the real IoT device 10 having capability 2 in installation location B.

With such a configuration, the virtual IoT device 550 is linked for each output port OP and each input port IP of the characteristic of the data to be handled.

The output port OP and the input port IP may be realized as a port to specify an application together with an IP address, or may be realized as a port distinguished on the application.

Hereinafter, the virtual IoT device 550 of a lower hierarchy is referred to as a virtual IoT device 550L, and the virtual IoT device 550 of an upper hierarchy is referred to as a virtual IoT device 550H.

### (Flow of linkage)

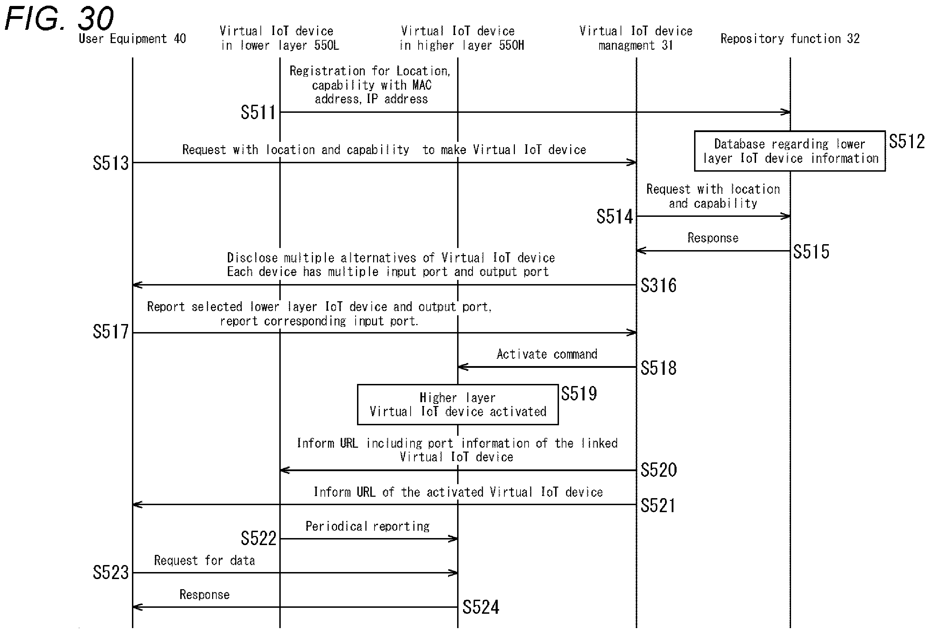

Fig. 30 is a view for explaining a flow of linkage between the virtual IoT device 550L of the lower hierarchy and the virtual IoT device 550H of the upper hierarchy.

Each process of Fig. 30 is performed basically in a similar manner to each process of Fig. 24.

However, in the configuration of Fig. 28, in step S516 of Fig. 30, the disclosure unit 62 of the virtual IoT device management unit 31 discloses device information including the port information described with reference to Fig. 29, to the user equipment 40. The presentation unit 72 of the user equipment 40 presents the device information disclosed by the disclosure unit 62, to the user 40A.

The device information of the virtual IoT device 550L presented to the user 40A may include port information of the output port OP of the virtual IoT device 550L to be linked with the virtual IoT device 550H of the upper hierarchy.

In step S517, the user equipment 40 requests the virtual IoT device management unit 31 for linkage between the output port OP of the virtual IoT device 550L selected by the user 40A and the input port IP of the corresponding virtual IoT device 550H.

Furthermore, in step S520, the informing unit 64 of the virtual IoT device management unit 31 informs the virtual IoT device 550L of a URL including information of the input port IP of the virtual IoT device 550H, as position information of the linked virtual IoT device 550H.

Note that, in step S522, the virtual IoT device 550L periodically transmits collected data to the virtual IoT device 550H. Such data update is performed for each output port OP and each input port IP corresponding to the characteristic of the data.

Therefore, in a case where data is updated in the virtual IoT device 550L of the lower hierarchy, that virtual IoT device 550L does not need to transmit data to all the linked virtual IoT devices 550H in the upper hierarchy. In other words, the virtual IoT device 550L is only required to transmit data only to the virtual IoT device 550H linked with the output port OP corresponding to the updated data characteristic.

Specifically, when the updated data is inputted to its own input port IP, the virtual IoT device 550L of the lower hierarchy specifies its own output port OP corresponding to the characteristic of the data. Then, the virtual IoT device 550L transmits the updated data to the virtual IoT device 550H of the upper hierarchy linked with the specified output port OP. Furthermore, in addition to transmitting the updated data, the virtual IoT device 550L may notify of a request for requesting the updated data.

According to the above processing, since one virtual IoT device 550 can simultaneously handle data having different characteristics, it is possible to efficiently collect data of various regions and data of various types from the virtual IoT device 550.

### (3-4. Burden of virtual IoT device in lower hierarchy)

In the hierarchical structure of the virtual IoT device, a virtual IoT device of an upper hierarchy can aggregate and acquire more data. Whereas, since a virtual IoT device of a lower hierarchy is arranged at the network edge, data with less latency can be acquired.

However, when direct access to the virtual IoT device of the lower hierarchy increases, a load of the virtual IoT device may increase. The load here refers to a load in terms of power consumption and the like. When linkage with the virtual IoT device of the upper hierarchy is performed, the load of the virtual IoT device of the lower hierarchy changes depending on which hierarchy of the virtual IoT device the user selects.

The user can grasp the hierarchy to which the virtual IoT device belongs from the device information as shown in Fig. 25. However, since the number and the like of virtual IoT devices of the upper hierarchy linked with the virtual IoT device are not presented as the device information, the user cannot recognize how much load the virtual IoT device has.

Therefore, burden information indicating a current burden state of the virtual IoT device is to be presented as the device information.

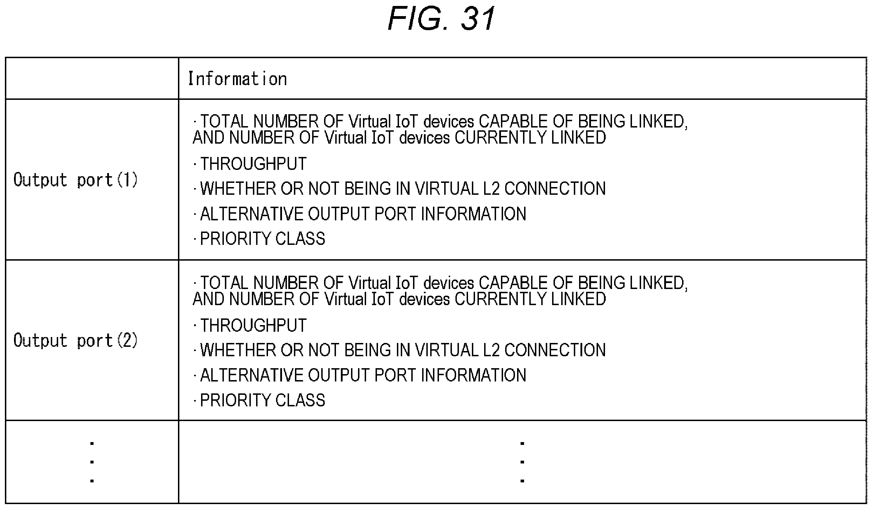

Fig. 31 is a view showing an example of burden information of the virtual IoT device, presented as device information.

As shown in Fig. 31, the burden information of the virtual IoT device is presented for each output port OP, and includes the following information.

(1) Total number of virtual IoT devices capable of being linked and number of virtual IoT devices currently linked
(2) Throughput
(3) Whether or not being in virtual L2 connection
(4) Alternative output port information
(5) Priority class

(1) indicates a number of maximum connections of the virtual IoT devices of the upper hierarchy that can be connected to the output port OP, and the number of current connections of the virtual IoT device of the upper hierarchy currently connected to the output port OP. For example, in a case where the number of maximum connections is 10 and the number of current connections is 9, it is possible to connect the virtual IoT device of the upper hierarchy to the output port OP. However, in a case where the number of current connections reaches 10, the virtual IoT device of the upper hierarchy can no longer be connected to the output port OP.
(2) indicates an amount of data that can be outputted from the output port OP per unit time. In a case where the amount of data to be outputted reaches this throughput as the number of connections of the output port OP increases, the virtual IoT device of the upper hierarchy can no longer be connected to the output port OP.
(3) is information indicating whether or not the output port OP is L2-connected to the virtual IoT device of the upper hierarchy by the VXLAN. In a case where L2 connection is established, it is possible to broadcast to the virtual IoT devices of the upper hierarchy, and thus, it is not necessary to consider (2).
(4) indicates position information (an URL, an IP address, and the like) of the virtual IoT device of the upper hierarchy having the output port OP that is an alternative to the output port OP. In a case where the virtual IoT device of the upper hierarchy cannot be connected to the output port OP due to (1) or (2), the user can select the virtual IoT device of the upper hierarchy indicated by this alternative output port information.
(5) is information indicating priority regarding linkage between the output port OP and the virtual IoT device of the upper hierarchy. Only virtual IoT devices in an upper hierarchy of a presented priority class can be connected to the output port OP.

By presenting such burden information as the device information, the user can recognize how much load the virtual IoT device has, and it is possible to avoid an increase in the load of the specific virtual IoT device.

### <4. Hardware configuration example>

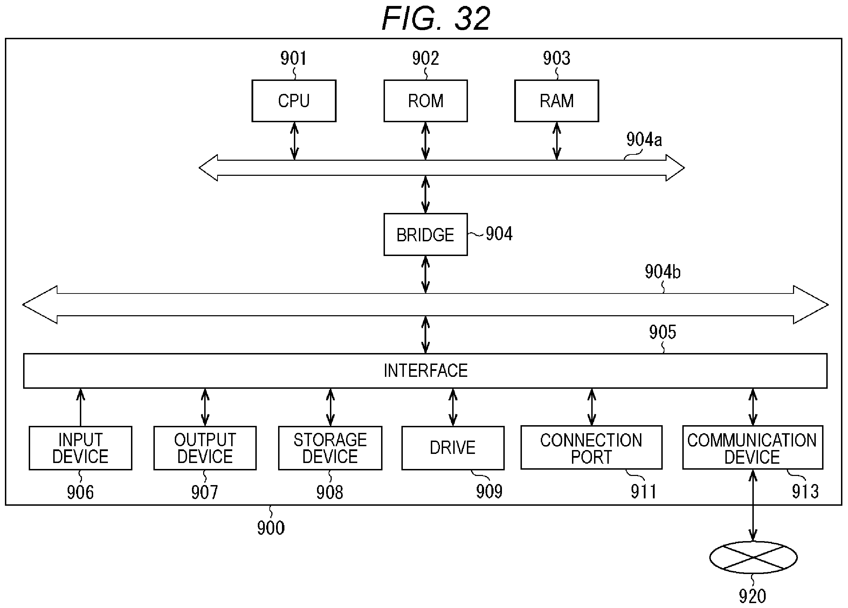

Next, a hardware configuration of an information processing apparatus according to an embodiment of the present disclosure will be described with reference to Fig. 32. Fig. 32 is a block diagram showing a hardware configuration example of the information processing apparatus according to the embodiment of the present disclosure.

An information processing apparatus 900 includes a central processing unit (CPU) 901, a read only memory (ROM) 903, and a random access memory (RAM) 905. Furthermore, the information processing apparatus 900 may include a host bus 907, a bridge 909, an external bus 911, an interface 913, an input device 915, an output device 917, a storage device 919, a drive 921, a connection port 923, and a communication device 925. Moreover, the information processing apparatus 900 may include an imaging device 933 and a sensor 935 as necessary. The information processing apparatus 900 may include a processing circuit such as a digital signal processor (DSP), an application specific integrated circuit (ASIC), or a field-programmable gate array (FPGA) instead of or in addition to the CPU 901.

The CPU 901 functions as an arithmetic processing device and a control device, and controls an overall operation or a part thereof in the information processing apparatus 900, in accordance with various programs recorded in the ROM 903, the RAM 905, the storage device 919, or a removable recording medium 927. The ROM 903 stores a program, operation parameters, and the like used by the CPU 901. The RAM 905 primarily stores a program used in execution of the CPU 901, parameters that appropriately change in the execution, and the like. The CPU 901, the ROM 903, and the RAM 905 are mutually connected by the host bus 907 including an internal bus such as a CPU bus. Moreover, the host bus 907 is connected to the external bus 911 such as a peripheral component interconnect/interface (PCI) bus via the bridge 909.

The input device 915 is a device operated by the user, such as, for example, a mouse, a keyboard, a touch panel, a button, a switch, and a lever. The input device 915 may be, for example, a remote control device using infrared rays or other radio waves, or external connection equipment 929 such as a mobile phone corresponding to an operation of the information processing apparatus 900. The input device 915 includes an input control circuit configured to generate an input signal on the basis of information inputted by the user, and output to the CPU 901. By operating the input device 915, the user inputs various types of data or gives an instruction to perform a processing operation, to the information processing apparatus 900.

The output device 917 includes a device capable of notifying the user of acquired information, by using senses such as visual sense, auditory sense, and tactile sense. The output device 917 may be, for example, a display device such as a liquid crystal display (LCD) or an organic electro-luminescence (EL) display, an audio output device such as a speaker or headphones, a vibrator, or the like. The output device 917 outputs a result obtained by processing of the information processing apparatus 900, as a video image such as text or image, sound such as voice or audio, vibration, or the like.

The storage device 919 is a data storage device configured as an example of a storage unit of the information processing apparatus 900. The storage device 919 includes, for example, a magnetic storage unit device such as a hard disk drive (HDD), a semiconductor storage device, an optical storage device, a magneto-optical storage device, or the like. The storage device 919 stores, for example, a program executed by the CPU 901 and various data, various data acquired from the outside, and the like.

The drive 921 is a reader/writer for the removable recording medium 927, such as a magnetic disk, an optical disk, a magneto-optical disk, or a semiconductor memory, and is built in or externally attached to the information processing apparatus 900. The drive 921 reads information recorded in the attached removable recording medium 927, and outputs to the RAM 905. Furthermore, the drive 921 writes a record in the attached removable recording medium 927.

The connection port 923 is a port for connection of equipment to the information processing apparatus 900. The connection port 923 may be, for example, a universal serial bus (USB) port, an IEEE 1394 port, a small computer system interface (SCSI) port, or the like. Furthermore, the connection port 923 may be an RS-232C port, an optical audio terminal, a high-definition multimedia interface (HDMI) (registered trademark) port, or the like. By connecting the external connection equipment 929 to the connection port 923, various data may be exchanged between the information processing apparatus 900 and the external connection equipment 929.

The communication device 925 is a communication interface configured with, for example, a communication device and the like for connection with a communication network 931. The communication device 925 is a communication card for, for example, a local area network (LAN), Bluetooth (registered trademark), Wi-Fi, a wireless USB (WUSB), and the like. Furthermore, the communication device 925 may be a router for optical communication, a router for asymmetric digital subscriber line (ADSL), a modem for various types of communication, or the like. For example, the communication device 925 transmits and receives signals and the like to and from the Internet and other communication equipment, by using a predetermined protocol such as TCP/IP. Furthermore, the communication network 931 connected with the communication device 925 is a network connected in a wired or wireless manner, and may include, for example, the Internet, a home LAN, infrared communication, radio wave communication, satellite communication, or the like.

The imaging device 933 is a device that generates a captured image by capturing an image of a real space by using, for example, various members such as an imaging element such as a complementary metal oxide semiconductor (CMOS) or a charge coupled device (CCD), and a lens to control image formation of a subject image on an image sensor. The imaging device 933 may capture a still image or may capture a moving image.

The sensor 935 is, for example, various sensors such as an acceleration sensor, an angular velocity sensor, a geomagnetic sensor, an illuminance sensor, a temperature sensor, an atmospheric pressure sensor, or a sound sensor (microphone). The sensor 935 acquires information regarding a state of the information processing apparatus 900 itself, such as, for example, a position of a housing of the information processing apparatus 900, and information regarding a surrounding environment of the information processing apparatus 900, such as brightness and noise around the information processing apparatus 900. Furthermore, the sensor 935 may include a global positioning system (GPS) receiver that receives a GPS signal and measures a latitude, a longitude, and an altitude of the device.

The hardware configuration example of the information processing apparatus 900 has been described above. Each component described above may be configured using a general-purpose member, or may be configured by hardware specialized for a function of each component. Such a configuration can be appropriately changed in accordance with a technical level at the time of implementation.

The embodiments of the technology according to the present disclosure are not limited to the above-described embodiments, and various modifications can be made without departing from the scope of the technology according to the present disclosure.

Furthermore, the effects described in this specification are merely examples and are not limited, and other effects may be present.

Moreover, the technology according to the present disclosure can have the following configurations.
(1) An information processing apparatus including:
   a presentation unit configured to present device information regarding a plurality of real IoT devices to a user; and
   a request unit configured to request linkage between a virtual IoT device and each of the real IoT devices corresponding to the device information selected by the user.
(2) The information processing apparatus according to (1), in which the presentation unit presents as the device information, at least one of an installation location or a capability of each of the real IoT devices.
(3) The information processing apparatus according to (2), in which the capability of each of the real IoT devices represents a transmission frequency of data acquired by the each of the real IoT devices, to the virtual IoT device that has been linked.
(4) The information processing apparatus according to (2), in which the capability of each of the real IoT devices represents resolution of data acquired by the each of the real IoT devices.
(5) The information processing apparatus according to any one of (1) to (4), in which
   the request unit requests data acquired by each of the real IoT devices, from the virtual IoT device linked with the each of the real IoT devices.
(6) The information processing apparatus according to (1) to (5), in which
   the request unit requests linkage between one piece of the virtual IoT device and a plurality of the real IoT devices corresponding to a plurality of pieces of the device information selected by the user.
(7) The information processing apparatus according to (1) to (6), in which
   the presentation unit displays a map in which a first icon is arranged at a position corresponding to an installation location of each of the real IoT devices, and displays a second icon indicating the virtual IoT device, and
   the request unit requests linkage between each of the real IoT devices and the virtual IoT device in accordance with an operation of associating the first icon with the second icon by the user.
(8) The information processing apparatus according to (7), in which the presentation unit displays the first icon in a different color for each capability of each of the real IoT devices.
(9) The information processing apparatus according to (7), in which the presentation unit displays a predetermined line connecting the first icon and the second icon, in accordance with the operation by the user.
(10) The information processing apparatus according to (9), in which in a case where linkage between each of the real IoT devices and the virtual IoT device is established, the presentation unit displays the line by changing to a different color.
(11) The information processing apparatus according to (7), in which the operation is drag and drop.
(12) The information processing apparatus according to (1), in which the request unit requests linkage between one piece of the virtual IoT device and each of the real IoT devices corresponding to one piece of the device information selected by the user, the each of the real IoT devices already being linked with another virtual IoT device.
(13) The information processing apparatus according to (12), in which the presentation unit presents, as the device information, a number of the another virtual IoT devices already linked with each of the real IoT devices.
(14) The information processing apparatus according to (13), in which the presentation unit displays a figure with a color density corresponding to a number of the another virtual IoT devices already linked with each of the real IoT devices.
(15) The information processing apparatus according to (13), in which the presentation unit displays a figure with a size corresponding to a number of the another virtual IoT devices already linked with each of the real IoT devices.
(16) The information processing apparatus according to (13), in which the presentation unit further presents, as the device information, a total number of the virtual IoT devices capable of being linked with each of the real IoT devices.
(17) The information processing apparatus according any one of to (1) to (16), in which
   the presentation unit presents a number of the real IoT devices newly installed and having a characteristic similar to each of the real IoT devices linked with the virtual IoT device.
(18) The information processing apparatus according to (17), in which the characteristic is at least one of an installation location or a capability of each of the real IoT devices.
(19) An information processing method for
   an information processing apparatus to execute:
   presenting device information regarding a plurality of real IoT devices; and
   requesting linkage between a virtual IoT device and each of the real IoT devices corresponding to the device information selected by a user.
(20) A program for causing
   a computer to execute processing of:
   presenting device information regarding a plurality of real IoT devices; and
   requesting linkage between a virtual IoT device and each of the real IoT devices corresponding to the device information selected by a user.

Furthermore, the technology according to the present disclosure can have the following configurations.
(1) An information processing apparatus including:
   a disclosure unit configured to disclose device information regarding a plurality of real IoT devices to user equipment;
   an activation unit configured to activate a virtual IoT device in response to a request for linkage between the virtual IoT device and each of the real IoT devices corresponding to the device information selected in the user equipment; and
   an informing unit configured to inform each of the real IoT devices and the user equipment of position information of the virtual IoT device.
(2) The information processing apparatus according to (1), in which the disclosure unit discloses, as the device information, at least one of an installation location or a capability of each of the real IoT devices, to the user equipment.
(3) The information processing apparatus according to (2), in which the capability of each of the real IoT devices represents a transmission frequency of data acquired by the each of the real IoT devices, to the virtual IoT device that has been linked.
(4) The information processing apparatus according to (2), in which the capability of each of the real IoT devices represents resolution of data acquired by the each of the real IoT devices.
(5) The information processing apparatus according to (1), in which data obtained by each of the real IoT devices is transmitted to the user equipment via the virtual IoT device linked with the each of the real IoT devices.
(6) The information processing apparatus according to (1), in which the activation unit activates one piece of the virtual IoT device in response to a request for linkage between one piece of the virtual IoT device and a plurality of the real IoT devices corresponding to a plurality of pieces of the device information selected in the user equipment.
(7) The information processing apparatus according to (1), in which the activation unit activates one piece of the virtual IoT device in response to a request for linkage between one piece of the virtual IoT device and each of the real IoT devices corresponding to one piece of the device information selected in the user equipment, the each of the real IoT devices already being linked with another virtual IoT device.
(8) The information processing apparatus according to (7), in which the disclosure unit discloses, as the device information, a number of the another virtual IoT devices already linked with each of the real IoT devices, to the user equipment.
(9) The information processing apparatus according to (8), in which the disclosure unit further discloses, as the device information, a total number of the virtual IoT devices capable of being linked with each of the real IoT devices, to the user equipment.
(10) The information processing apparatus according to (7), in which in response to activation of the virtual IoT device, the informing unit informs the another virtual IoT device that a number of the virtual IoT devices linked with each of the real IoT devices has increased.
(11) The information processing apparatus according to (7), in which each of the real IoT devices and a plurality of the virtual IoT devices linked with the each of the real IoT devices are in L2 connection by a virtual extensible local area network (VXLAN).
(12) The information processing apparatus according to (1), in which the disclosure unit discloses, to the user equipment, a number of the real IoT devices newly installed and having a characteristic similar to each of the real IoT devices linked with the virtual IoT device.
(13) The information processing apparatus according to (12), in which the characteristic is at least one of an installation location or a capability of each of the real IoT devices.
(14) An information processing method for
   an information processing apparatus to execute:
   disclosing device information regarding a plurality of real IoT devices to user equipment;
   activating a virtual IoT device in response to a request for linkage between the virtual IoT device and each of the real IoT devices corresponding to the device information selected in the user equipment; and
   informing each of the real IoT devices and the user equipment of position information of the virtual IoT device.
(15) A program for causing
   a computer to execute processing of:
   disclosing device information regarding a plurality of real IoT devices to user equipment;
   activating a virtual IoT device in response to a request for linkage between the virtual IoT device and each of the real IoT devices corresponding to the device information selected in the user equipment; and
   informing each of the real IoT devices and the user equipment of position information of the virtual IoT device.

### REFERENCE SIGNS LIST

- 10: Real IoT device
- 20: Internet
- 30: Server
- 31: Virtual IoT device management unit
- 32: Repository function unit
- 40: User equipment
- 50: Virtual IoT device
- 61: Communication unit
- 62: Disclosure unit
- 63: Activation unit
- 64: Informing unit
- 71: Communication unit
- 72: Presentation unit
- 73: Request unit

## Claims

1. An information processing apparatus comprising:
a presentation unit configured to present device information regarding a plurality of real IoT devices to a user; and
a request unit configured to request linkage between a virtual IoT device and each of the real IoT devices corresponding to the device information selected by the user.

2. The information processing apparatus according to claim 1, wherein
the presentation unit presents, as the device information, at least one of an installation location or a capability of each of the real IoT devices.

3. The information processing apparatus according to claim 2, wherein
the capability of each of the real IoT devices represents a transmission frequency of data acquired by the each of the real IoT devices to the virtual IoT device that has been linked.

4. The information processing apparatus according to claim 2, wherein
the capability of each of the real IoT devices represents resolution of data acquired by the each of the real IoT devices.

5. The information processing apparatus according to claim 1, wherein
the request unit requests data acquired by each of the real IoT devices, from the virtual IoT device linked with the each of the real IoT devices.

6. The information processing apparatus according to claim 1, wherein
the request unit requests linkage between one piece of the virtual IoT device and a plurality of the real IoT devices corresponding to a plurality of pieces of the device information selected by the user.

7. The information processing apparatus according to claim 1, wherein
the presentation unit displays a map in which a first icon is arranged at a position corresponding to an installation location of each of the real IoT devices, and displays a second icon indicating the virtual IoT device, and
the request unit requests linkage between each of the real IoT devices and the virtual IoT device in accordance with an operation of associating the first icon with the second icon by the user.

8. The information processing apparatus according to claim 7, wherein
the presentation unit displays the first icon in a different color for each capability of each of the real IoT devices.

9. The information processing apparatus according to claim 7, wherein
the presentation unit displays a predetermined line connecting the first icon and the second icon, in accordance with the operation by the user.

10. The information processing apparatus according to claim 9, wherein
in a case where linkage between each of the real IoT devices and the virtual IoT device is established, the presentation unit displays the line by changing to a different color.

11. The information processing apparatus according to claim 7, wherein
the operation is drag and drop.

12. The information processing apparatus according to claim 1, wherein
the request unit requests linkage between one piece of the virtual IoT device and each of the real IoT devices corresponding to one piece of the device information selected by the user, the each of the real IoT devices already being linked with another virtual IoT device.

13. The information processing apparatus according to claim 12, wherein
the presentation unit presents, as the device information, a number of the another virtual IoT devices already linked with each of the real IoT devices.

14. The information processing apparatus according to claim 13, wherein
the presentation unit displays a figure with a color density corresponding to a number of the another virtual IoT devices already linked with each of the real IoT devices.

15. The information processing apparatus according to claim 13, wherein
the presentation unit displays a figure with a size corresponding to a number of the another virtual IoT devices already linked with each of the real IoT devices.

16. The information processing apparatus according to claim 13, wherein
the presentation unit further presents, as the device information, a total number of the virtual IoT devices capable of being linked with each of the real IoT devices.

17. The information processing apparatus according to claim 1, wherein
the presentation unit presents a number of the real IoT devices newly installed and having a characteristic similar to each of the real IoT devices linked with the virtual IoT device.

18. The information processing apparatus according to claim 17, wherein
the characteristic is at least one of an installation location or a capability of each of the real IoT devices.

19. An information processing method for
an information processing apparatus to execute:
presenting device information regarding a plurality of real IoT devices; and
requesting linkage between a virtual IoT device and each of the real IoT devices corresponding to the device information selected by a user.

20. A program for causing
a computer to execute processing of:
presenting device information regarding a plurality of real IoT devices; and
requesting linkage between a virtual IoT device and each of the real IoT devices corresponding to the device information selected by a user.
